# EUROPEAN PATENT SPECIFICATION

(11) **EP 3 232 759 B1**
(45) Date of publication and mention of the grant of the patent: **06.02.2019**
(21) Application number: 15832907.8
(22) Date of filing: 11.12.2015
(51) Int. Cl.: A01B 59/00, A01B 63/22, B60D 1/62

(54) **FLUID CONNECTION DETECTOR AND FLUID CONNECTION DETECTING METHOD**
FLUIDVERBINDUNGSDETEKTOR UND FLUIDVERBINDUNGSDETEKTIONSVERFAHREN
DÉTECTEUR DE COMMUNICATION FLUIDIQUE ET PROCÉDÉ DE DÉTECTION DE COMMUNICATION FLUIDIQUE

(30) Priority: 19.12.2014 NL 2014017
(43) Date of publication of application: 25.10.2017
(73) Proprietor: Forage Innovations B.V., 3147 PB Maassluis (NL)
(72) Inventor: REIJERSEN VAN BUUREN, Willem Jacobus, 3147 PB Maassluis (NL)
(74) Representative: AGCO Intellectual Property Department
(86) International application number: PCT/NL2015/050859
(87) International publication number: WO 2016/099257

(56) References cited:
- EP-A1- 2 018 981
- US-A1- 2011 315 234

## Description

### 1. FIELD OF THE INVENTION

The invention refers to a hydraulic system of an agricultural machine. The hydraulic system comprises an assembly for detecting a fluid connection between a fluid source and at least one machine part. In the case of an established fluid connection the machine part is supplied with a hydraulic fluid conveyed out of the fluid source. In particular the hydraulic system supplies a part of an agricultural implement with fluid wherein the implement is pulled by a tractor and the tractor comprises the fluid source which provides the fluid. The agricultural implement can be a haymaking machine, a baler, a self-loading wagon, a mower or a soil cultivating machine and can be connected or hitched to a tractor, e.g. The invention further refers to a method for automatically detecting such a fluid connection.

### 2. BACKGROUND OF THE INVENTION

In the field of agriculture many different types of machines are available for different types of work that must be done on the field. Many agricultural machines such as haymaking machines, balers, self-loading wagons, mowers, seeding machines, or soil cultivating machines need to be pulled over the field and for that reason they can be connected or hitched to a pulling vehicle such as a tractor. In this application the agricultural machine operates as an implement.

All such agricultural implements comprise working elements or moveable machine parts. At least some of those working elements or machine parts are powered by hydraulic energy or hydraulic motors. The hydraulic power source is often not mounted on board of the implement itself. In this case the agricultural implement has to be connected to the hydraulic system of the pulling vehicle which provides a source of hydraulic energy and/or working fluid and a fluid pump.

In order to connect an agricultural implement to the hydraulic system of a tractor or further pulling vehicle, the pulling vehicle is typically provided with a plurality of hydraulic pressure supply connecting devices to which hydraulic pressure lines, provided with suitable connectors (end pieces), of the agricultural implement can be connected. Before starting operation a human operator connects the connectors with the pressure supply connecting devices. Once these hydraulic lines are connected to the hydraulic pressure supply connecting devices of the pulling vehicle, the agricultural implement can be operated. The operator works in a driver's cabin of the pulling vehicle and triggers agricultural functions during operation.

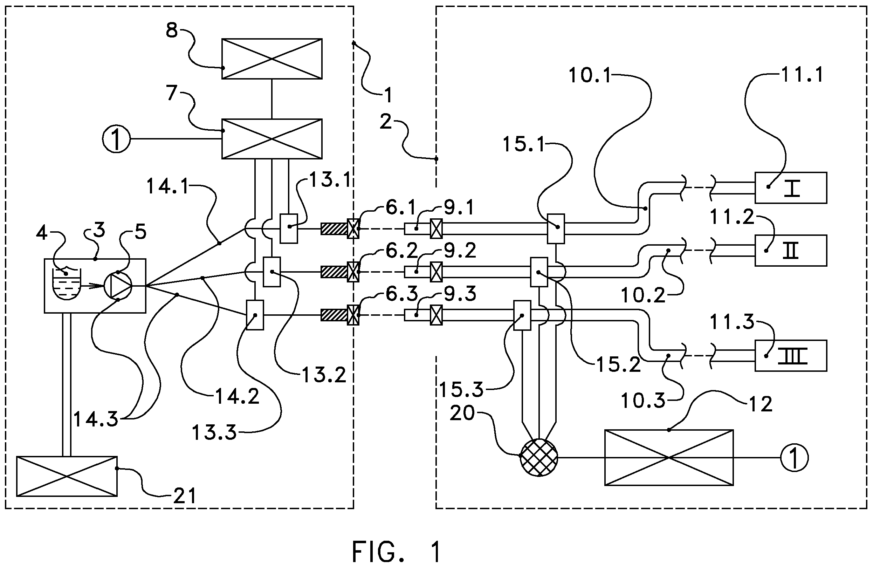

US 20110315234 A1 discloses an agricultural combination with a tractor 90 and an implement 10, cf. Fig. 1. For steering the implement 10, two actuating cylinders 38 and 40 can steer the two left wheels and the two right wheels 26 of the implement 10, resp., cf. Fig. 3. Therefore the implement 10 can selectively move in a curve to the right or to the left. Fig. 10 shows a hydraulic system for supplying the actuating cylinders 38 and 40 with hydraulic fluid. A hydraulic supply 96 mounted on board of the tractor 90 is connected with the implement by means of a first hydraulic conduit 98 and a second hydraulic conduit 100. Pressurized fluid is either supplied to the first conduit 98 or to the second conduit 100. The other conduit 100 or 98 serves as a return conduit to convey fluid back to the hydraulic supply 96. A controller 142 controls two selection control valves 102 and 100. The first selection control valve 102 selectively enables a flow between the first conduit 98 and the cylinders 38 and 40 in both directions or blocks a flow from the supply 96 to the cylinders 38 and 40. The second selection control valve 110 operates similarly for the second conduit 100. A first pressure sensor 138 measures the fluid pressure in the first conduit 98. A second pressure sensor 140 measures the fluid pressure in the second conduit 100. The controller 142 can thereby automatically determine which conduit 98 or 100 is supplied with pressure by selecting the conduit with the higher pressure. This information as well as the measured angle of the implement wheels 26 enables the controller 142 to automatically adjust the implement wheels 26 in a selected position. In addition the controller 142 can generate an alert to the operator if the fluid pressure within one conduit 98 or 100 is not sufficient for facilitate the desired or required rotation of the implement wheels 26.

In many applications the vehicle controller is pre-programmed in that a certain control action, for example by means of a computer on board of the pulling vehicle or by means of a manually operated lever, pressurizes or depressurizes a specific tractor-mounted connecting device. However, performing this operation does require that the proper implement part is supplied with fluid. To do so the correct connecting device of the pulling vehicle must supply fluid to this implement part. This means that in case that an incorrect connection has been made, the agricultural implement will not work at all or will not properly operate.

The desired function can only be performed or stopped if the pressurized or de-pressurized tractor-mounted connecting device is in fact connected to an implement part which performs a function or stops performing the function. Otherwise a malfunction may occur.

A simple solution would be that every hydraulic line of the implement can only be connected with exactly one tractor-mounted connecting device. But this solution would require a lot of different connecting devices and hydraulic line end pieces and would increase the costs for manufacturing and for supplying spare parts. Therefore it is desired to use standardized connecting devices and end pieces. A consequence is that one end piece can be connected with several connecting devices.

A known solution to assist the operator of the agricultural implement in connecting the implement to the tractor is as follows: The control unit uses a desired connecting scheme which assigns every hydraulic line to exactly one connecting device. The operator is assisted in connecting the hydraulic lines with the connecting devise according to this connecting scheme by providing the hydraulic connecting devices of the pulling vehicle and the hydraulic lines of the implement with two corresponding color coding systems. Every coding system comprises colored labels and/or colored lines. In this manner the operator is guided by the colored labels or lines to make sure that the hydraulic lines of the implement are in fact attached or connected to the intended connecting devices providing hydraulic pressure, i.e. that the given connecting scheme is properly considered.

A different solution which avoids the need of color coding is described in EP 2018981 B1. According to this solution several hydraulic lines of the agricultural implement are provided with individual (RFID) transponders that can be connected to a respective mating connection for the supply of hydraulic energy on the tractor. The presence of a connection between a hydraulic line on the implement and a connection device on the tractor is detected by means of a so-called connection position detection apparatus implemented as an RFID reader. This RFID reader can read out the data stored in the transponders. The detection apparatus can supply the read out data to a controller on board of the tractor and by doing so provides said controller with the connection position information. After having received such information, the controller of the tractor can control the agricultural machine on the basis of the connection position information provided by the position detection apparatus.

### 3. SUMMARY OF THE INVENTION

A problem solved by the invention is to provide a hydraulic system with the features of the preamble of claim 1 and a fluid connection detecting method with the features of the preamble of claim 14 wherein a coding system with different colors or patterns needs not to be used and wherein the control unit can automatically identify that connecting device which is currently connected with the hydraulic line without the need of using several RFID chips or a further identification device which is necessarily subjected to dirt or rain.

This problem is solved by a hydraulic system with the features of claim 1 and by a fluid connection detecting method with the features of claim 14. Preferred embodiments are specified in the depending claims.

The hydraulic system according to the invention is for use on board of an agricultural machine and comprises
- at least one source for hydraulic fluid,
- a plurality of connecting devices,
- at least one hydraulic line,
- a control unit, and
- a detection device.

In the following the term "fluid" covers every kind of liquid or gas which can be conveyed from a source via at least one line to a fluid consumer on board of the agricultural machine. The term "fluid connection" denotes every kind of an assembly than can guide a fluid from a starting point to a target point.

A fluid connection between every connecting device and the or with one fluid source can be established. The or every hydraulic line is connectable with all or with some connecting devices or with at least one connecting device - one hydraulic line with one connecting device per time. On the other hand every connecting device of the plurality can be connected with the or with at least one hydraulic line. According to an intended use the hydraulic line can be disconnected from the connecting device. Actually connecting the or one hydraulic line with a connecting device and establishing a fluid connection between this connecting device and the or one fluid source establishes a fluid connection between this fluid source and this hydraulic line. A proper fluid connection between the hydraulic line and the fluid source can alternatively be established via several connecting devices.

The detection device can automatically detect whether or not at least one hydraulic line is supplied with fluid. If fluid supply is detected, the detection device generates a fluid supply detection signal. The control unit can receive and evaluate signals from the detection device. By evaluating received signals the control unit can automatically identify that or every connecting device of the plurality which is in fact connected with the or with one hydraulic line.

The connecting device which is in fact connected is automatically identified as follows:
- The control unit selects every connecting device of the plurality - one device after the other.
- The control unit establishes a fluid connection between the or one fluid source and the selected connecting device. Only this selected connecting device is currently in fluid connection with the or one fluid source. The other connecting devices are currently not in fluid connection while the detection step for the selected connecting device is performed. By this step a fluid connection between the fluid source and the hydraulic line via the selected connecting device is established - provided the hydraulic line is in fact connected with the currently selected connecting device.
- The detection device detects whether or not the or at least one hydraulic line is currently supplied with fluid.
- In the case that fluid supply is detected in this hydraulic line, the detection device generates a fluid supply detection signal.
- The control unit receives and evaluates signals from the detection device and detects what connection device is selected by the control unit when the fluid supply detection signal is received.
- The control unit identifies that connecting device as the connecting device being in fact connected with the or with one hydraulic line which is selected when the fluid supply detection signal is received.

With other words: The control unit tries to establish on a trial base a fluid connection between the fluid source and the hydraulic line via the currently selected connecting device. This attempt is made for every connecting device of the plurality. If a fluid supply detection signal is received, the control unit automatically concludes that the trial was successful and that the selected connecting device is in fact connected with the hydraulic line. The fluid supply detection signal is only generated if a fluid connection between the or at least one hydraulic line and the or at least one fluid source is in fact established.

### 4. ADVANTAGES

The hydraulic system according to the invention can alternatively be operated in different operating states as the or one hydraulic line can alternatively be connected with several connecting devices of the plurality - one connecting device per time. Every operating state is a proper state, i.e. not an error or a malfunction. The hydraulic system of the embodiment can automatically detect which operating state currently occurs. This distinguishes the hydraulic system according to the invention from other systems which can only detect whether or not a malfunction has occurred.

The detecting method according to the invention releases the need to provide a connecting scheme which specifies for the or every hydraulic line one respective connecting device wherein the actual connections must be established according to this connecting scheme. In contrast several different connections lead to a proper operation as the actual connections are automatically detected.

Thanks to the invention it is not necessary to provide different kinds of connecting devices or different types of corresponding connectors (end pieces) at the hydraulic line(s) such that the or every hydraulic line can only be connected with exactly one connecting device of the plurality. Using only one kind of connecting devices and one kind of connectors makes it easier to manufacture and maintain the agricultural machine and reduces the set of required different spare parts. It is possible to use standardized parts such that the same agricultural implement subsequently with different pulling vehicles.

The hydraulic system according to the invention does not rely on the experience of an operator to connect the or every hydraulic line with a required or desired connecting device of the plurality. In contrast the hydraulic system automatically detects the used connecting device. The operator only needs to connect the or every hydraulic line with a mechanically mating connecting device of the plurality. No connecting scheme is necessary.

The invention provides a very robust solution that does not suffer from any of the disadvantages of the prior art. This will be explained below. The operator of the agricultural machine simply connects the or every hydraulic line of the plurality to one mechanically mating connecting device of the plurality. The or every connection is automatically detected. The control unit automatically performs the connection detection.

The drawbacks of known solutions are avoided by the invention. Agricultural machines are used in rough situations and in dirty or moist environments and are subjected to all kinds of weather conditions. In particular in case of rainy weather or darkness or dirt on the machine or wear due to mechanical stress, different colors or different patterns of a coding system can often hardly be distinguished from each other. Labels with colors or patterns can be lost. A coding system only provides a limited set of sufficiently different colors or patterns and increases the number of different parts. In addition the rough conditions may quickly damage the electronics of an RFID system. For example the RFID tags may become damaged or dirty, which seriously affects their proper operation.

Another drawback of the use of an RFID-based system is the following one: The connecting devices of a pulling and supplying vehicle (a tractor, e.g.) are located quite close to each other. This means that also the hydraulic lines with the RFID tags will be close to each other when attached to the vehicle. After connecting the hydraulic lines to the connecting devices the RFID tags will be close to neighboring RFID readers. This proximity may give rise to false readings and consequently give rise to incorrect connection information provided to the controller of the pulling vehicle. Proper functioning and control of the agricultural machine attached thereto will than not be possible. The invention avoids this disadvantage.

The hydraulic system according to the invention can automatically identify that connecting device which is in fact connected by using a detection device which can be positioned in the interior of the agricultural machine. This detection device is therefore less subjected to the environmental conditions. At least a part of the detection device can be positioned quite far away from the connecting devices and the corresponding connectors (end pieces) of the hydraulic lines.

The detection device according to the invention only needs to monitor the or every connectable hydraulic line but does not need to process signals from a sensor for the connecting devices. In particular no contact sensor is required wherein the contact sensor measures whether or not a connecting device is in fact connected with a hydraulic line. The control unit needs only to be connected with the detection device but does not require signals from a sensor for monitoring the connecting devices. Therefore the invention saves a sensor for the connecting devices.

In addition the detection device needs not to detect the fluid source. It suffices that the detection device decides whether or not the or every connectable hydraulic line is currently supplied with fluid. For this detection it suffices to monitor the hydraulic line itself. These features are in particular of advantage if the parts of the hydraulic system are distributed onto two different vehicles, e.g. onto a tractor and an implement, which can mechanically and hydraulically be connected with each other and can be disconnected again. The detecting device can entirely be mounted on board of the implement.

The hydraulic system according to the invention only requires a quite simple detection device. This detection device only needs to detect whether or not a hydraulic line is supplied with fluid. It is not necessary to measure the hydraulic pressure or even to compare measured hydraulic pressures in different parts of a machine or at different time points. Thereby the detection device only requires simple sensors. Often such sensors are already implemented on board of the agricultural machine.

The connection detection according to the invention does not restrict the number of connecting devices or hydraulic lines which can be used. Thereby the invention overcomes one disadvantage of a coding system.

It is possible to use the invention several times for different implements which are subsequently connected with the same pulling vehicle. In turn it is possible to use the invention several times for the same implement which is subsequently connected with different pulling vehicles.

### 5. PREFERED EMBODIMENTS

According to the invention the control unit establishes a fluid connection between the or one fluid source and the selected connecting device. Preferably the control unit blocks or interrupts the fluid connection between the fluid source and all other connecting devices of the plurality.

Different implementations are possible how a fluid connection between the fluid source and exactly one connecting device is established. In one implementation the control unit moves a switch in a hydraulic line or a switch for a port or actuates a multi-port valve positioned in a hydraulic connection between the fluid source and the connecting devices of the plurality. In a further implementation a plurality of fluid lines connects the fluid source with the connecting devices of the plurality. A respective valve is assigned to every fluid line. The control unit triggers these valves. After selecting a connecting device, the control unit opens the valve assigned to the fluid line guiding to the selected connecting device and closes or keeps closed every other valve assigned to an other fluid line. If the invention is used in a combination comprising a pulling vehicle and an implement, the connecting devices, the fluid lines, the valves, and the multi-port valve are preferably mounted on board of the pulling vehicle.

According to one embodiment of the invention use is made of the presence of hydraulic pressure in the or in at least one hydraulic line as an indicator that the hydraulic line is supplied with fluid. The control unit triggers a hydraulic pressure generator, e.g. a hydraulic pump, belonging to the fluid source. Thereby fluid is ejected under pressure out of the or at least one fluid source towards the connecting devices. For detecting the connection device connected with the hydraulic line, the control unit pressurizes one after the other in a subsequent manner the connecting devices, e.g. by positioning a multi-port valve or by opening and closing valves. This hydraulic pressure is transmitted to the or to at least one connected hydraulic line. A pressure detection signal is generated if a pressure above a given threshold is detected. Thereby the receipt of a pressure detection signal sent by the detection device will allow the control unit to positively detect what connecting device of the plurality is in fact connected to the or to one hydraulic line of the agricultural machine. This pressure detection signal serves as the fluid supply detection signal.

According to the invention the detection device generates a fluid supply detection signal if the detection device detects that the or one hydraulic line is supplied with fluid. Preferably the detection device generates a non-detection signal if it is detected that a hydraulic line is not supplied with fluid. This embodiment enables to detect a malfunction: If the control unit neither receives the or at least one fluid supply detection signal nor the or at least one non-detection signal, a malfunction has occurred, e.g. a failure of the detection device or an interruption in the signal transmission. Receiving simultaneously several fluid supply detection signals can also be a clue for a malfunction. If the control unit receives only non-detection signals, it is clear that no hydraulic line is connected with a connection device.

According to an application of the invention the agricultural machine comprises a plurality of hydraulic lines that are each connectable to at least one connecting devices of the plurality - one hydraulic line with one connecting device per time. In one application the number of hydraulic lines is smaller than the number of available connecting devices. In a further application these two numbers are equal. In both applications at least one hydraulic line can properly be connected with several connecting devices - of course only with one connecting device per time.

Usually an agricultural implement, such as a haymaking machine or a rake or a baler or a loader wagon, is provided with more than one hydraulic line. For operating the implement every hydraulic line or at least several hydraulic lines needs to be connected to the or to one fluid source on board of a pulling vehicle. Therefore several connecting devices which are also mounted on the pulling vehicle will be connected with hydraulic lines. After being properly connected, the plurality of hydraulic lines guides fluid to several movable parts of the implement.

In one embodiment the detecting procedure is shortened. According to this embodiment the maximal number of hydraulic lines which are to be connected with connecting devices is given or is detected in advance. This number may even be 1. The control unit counts the number of fluid supply detection signals. As soon as the received signal number reaches the given or detected maximal line number, the detection procedure is terminated. It is now clear for every hydraulic line to be connected the respective connecting device is detected.

In one application of the invention the hydraulic lines and the detection device are arranged on board of the implement. Every implement-mounted hydraulic line guides fluid to at least one implement part to be supplied with fluid. The control unit is preferably arranged on board of a pulling vehicle, e.g. on board of a tractor.

In such a situation it is not enough to "know" which connecting device is indeed connected to a hydraulic line. In addition the control unit must also "know" which specific hydraulic line of the implement is connected to which connecting device on the pulling vehicle. If this requirement is fulfilled, the control unit can supply an implement part with fluid just by pressurizing one connecting device wherein the control unit does not need to obtain access directly to an implement part. It suffices that the control unit receives signals from the detection device.

In order to enable this automatic detection, data that is unique for each hydraulic line is included in every fluid supply detection signal that is provided to the control unit, e.g. to an tractor controller or implement controller. In this embodiment the detection device is arranged to include data unique for each hydraulic line in the fluid supply detection signal upon detection of a fluid connection in that hydraulic line. Preferably such data included in the fluid supply detection signal comprises hydraulic line identification data or sensor identification data so that each hydraulic line or sensor can automatically be identified.

In one implementation a respective fluid supply detection sensor is assigned to every hydraulic line, i.e. every hydraulic line has its own sensor. Every sensor has a unique identifier, i.e. an identifier which at least distinguishes this sensor from every other fluid supply detection sensor on board of this machine. If a sensor detects fluid supply, the identifier of this sensor is included into the generated fluid supply detection signal. A hydraulic line is identified by the identifier of the assigned sensor. In a further implementation the fluid supply detection signal includes an identifier of that implement part which is connected with the hydraulic line and is thereby in fact supplied with fluid. For sake of redundancy both implementations can be combined.

According to an embodiment the fluid supply detection signal can further comprise data characterizing a hydraulic part or assembly on the machine that is connected to a respective hydraulic line. In other words: The fluid supply detection signal comprises data relating to the type of hydraulic part or assembly on the agricultural machine or the specific hydraulic consumer of hydraulic energy that is to be supplied with fluid via the connecting devices. Such information will consequently, together with the fluid supply detection signal, be provided to the control unit.

Preferably the hydraulic part or assembly of the machine comprises at least one hydraulic piston-cylinder device or a group of hydraulic piston-cylinder devices. The transmitted data can characterize the required pressure or the required time span for activating the piston-cylinder device.

In one implementation the identifier of the implement part is determined as follows: A controller on board of the implement generates a computer-accessible table which assigns to every hydraulic line or to every fluid supply detection sensor assigned to a hydraulic line on board of the implement an identifier of the implement part or the parts connected with this hydraulic line. This implement-mounted table is generated before the first implement operation is performed. It remains constant as long as the construction and implementation of the implement remains unchanged. As long as the hydraulic assembly remains unchanged, the same table can be used for several implement operations. The table is updated if the hydraulic assembly on board of the implement is changed.

The embodiment that an implement part identifier is included into the fluid supply detection signal enables to design the implement as a black box: The control unit on board of the pulling vehicle does not need data about hydraulic connections on board of the implement. In particular any connecting information about hydraulic lines and valves on board of the implement is not needed. A sensor for detecting fluid supply needs not to be integrated into the implement part itself but can be connected with an implement-mounted hydraulic line.

According to an embodiment the agricultural machine comprises a plurality of hydraulic lines, a fluid pressure generator and a machine controller. The machine controller is arranged to control a connection between the or every hydraulic line of the plurality and the detection device. By arranging the controller such that it controls the connection between the hydraulic lines and the detection device it is possible to alternately connect the detection device to every hydraulic line of the plurality and thus to alternately sample the pressure (in general: the presence of fluid supply) in the connected hydraulic line.

In one implementation the detection device comprises a single pressure sensor that is operatively connectable to each hydraulic line and is arranged to alternately sample the pressure in each hydraulic line. In this manner a very simple arrangement is provided that is able to sample or detect the presence of hydraulic pressure in the respective hydraulic lines, yielding a simple and robust system. Only one pressure sensor is needed.

According to an embodiment the detection device comprises multiple pressure sensors or further fluid supply detection sensors wherein each sensor is connected or is arranged to be connected or otherwise assigned to one hydraulic line of the plurality. This provides a system wherein each hydraulic line has its own dedicated fluid supply detection sensor which in turn provides an even further simplified system for connection detection.

According to an embodiment the agricultural machine comprises an operating device, i.e. a device that can be actuated by a human operator and can be used to control the operation of the agricultural machine and that is operatively connected to the control unit. The control unit assigns, on the basis of the fluid supply detection signal, a specific hydraulic fluid connection to a specific function of the machine and/or displays information relating thereto to the operator. In this way the fluid connection that is detected is used to assign specific functions to the control unit or operating device. For example, the command to actuate a certain hydraulic group or assembly is assigned to a certain control button or lever in a user terminal of the agricultural machine without the need for the operator to manually assign these functions or to test and try which control function has what effect on the machine. This greatly simplifies operation of the agricultural machine.

The intended use of the invention is that a machine part is connected with the hydraulic line and is supplied with fluid. In one application the machine part is driven by the hydraulic or pneumatic fluid which is supplied via the provided fluid connection. The hydraulic fluid is supplied to the machine part with a sufficient pressure. In further applications the fluid serves for greasing or lubricating or cooling or heating or washing or otherwise cleaning or drying or moistening the part. The fluid can be a liquid or a gas, e.g. an oil or a dissolving or cooling liquid or pressurized air.

The invention can be used on board of an agricultural combination comprising an agricultural implement and a pulling tractor or further pulling vehicle. The implement can be a non-propelled vehicle or an attachment without ground-engaging wheels and is mechanically connected with the pulling vehicle. The or every fluid source and the connecting devices are arranged on board of the pulling vehicle. The fluid source is connected to or is connectable with every connecting device belonging to the pulling vehicle. The or every hydraulic line belongs to the implement.

In one implementation the agricultural machine comprises a motorized vehicle and an attachment, e.g. an implement with or without wheels rolling over ground. The or every fluid source and every connecting device of the plurality are mounted on board of the vehicle. The or every hydraulic line and at least one part to be supplied with fluid are mounted on board of the implement or further attachment. Preferably the detection device is also mounted on board of the implement. The control unit can comprise an implement controller which is connected with the detecting device and a vehicle controller which can be connected with the implement controller. In a further embodiment all parts of the hydraulic system - or at least all mechanical parts - are arranged on board of the same vehicle which serves as the agricultural machine. It is also possible that the control unit is arranged on board of a remote device, e.g. on a portable computer.

These and other aspects of the invention and of the preferred embodiment will be even more apparent from the detailed embodiment as described below and will be elucidated in detail there.

### 6. BRIEF DESCRIPTION OF THE DRAWINGS

Fig. 1 shows schematically a block diagram of the hydraulic system;
Fig. 2 shows the operation of the control units and the detection device by means of a flow diagram.

### 7. DETAILED DESCRIPTION OF EMBODIMENT

In the embodiment the invention is used in an agricultural combination comprising a tractor 1 and an agricultural implement 2, cf. Fig. 1. The implement 2 performs at least one agricultural function, e.g. picks up crop material from the ground and presses bales from the picked-up crop material or threshes the crop material or stores the picked up crop material in a storage room or makes hay or mows grass or processes the soil or distributes seed corns over the ground or distributes a substrate to the soil. The implement 2 performs the agricultural function by means of several rotated or otherwise moved parts which are driven by a pressurized hydraulic fluid.

In the embodiment the implement 2 does not comprise an own motor but is pulled by the tractor 1. The implement 2 also does not comprise a source for pressurized hydraulic fluid. The implement 2 is connected with the pulling tractor 1 in several ways:
- The implement 2 is mechanically connected with the tractor 1 via an implement towing unit and a corresponding tractor hitch (not shown) such that the tractor 1 can pull or shift the implement 2 over ground.
- A PTO shaft of the tractor 1 rotates a connected input shaft (not shown) of the implement 2.
- The tractor 1 supplies some moved parts of the implement 2 with pressurized hydraulic fluid (to be explained below).
- A data connection (sketched in Fig. 1) is established between the control unit 7 of the tractor and the control unit 12 of the implement 2. Preferably this data connection operates according to the ISO bus standard (ISO 11783).

The block diagram of Fig. 1 shows schematically a tractor motor 21 and three moveable parts 11.1, 11.2, and 11.3 of the implement 2 which are hydraulically driven by the tractor motor 21 via fluid connections. Of course the invention can be used for every other number of driven parts on board of the implement 2.

Possible examples for such parts are piston-cylinder devices which drive or pivot a pick-up unit, a tailgate, a roller, a wrapping material holder, and/or a flap. One hydraulically driven part can also tension a pressing belt surrounding a drum-shaped bale forming chamber or a pivotal sidewall of a rectangular pressing channel or a crop material conveyor belt, e.g.

Every piston-cylinder device 11.1, 11.2, 11.3 is only activated temporarily depending on the achieved progress while performing the agricultural function and/or depending on a corresponding input from a human operator.

For activating or otherwise moving a hydraulically driven implement part 11.1, 11.2, 11.3, a fluid connection to a fluid source on board of the tractor 1 has to be established. The hydraulic system of the embodiment provides this fluid connection and comprises the following parts, cf. Fig. 1:
- a source 3 for pressurized hydraulic fluid, the fluid source 3 comprising a fluid reservoir 4 and a fluid pump 5 wherein the fluid source 3 is mounted on board of the tractor 1 and the pump 5 is driven by the tractor motor 21,
- three connecting devices 6.1, 6.2, 6.3 mounted in a rear wall of the tractor 1,
- three parallel hydraulic lines 14.1, 14.2, 14.3 beginning in the fluid source 3 and mounted on board of the tractor 1 wherein every hydraulic line 14.x connects the fluid source 3 with one connecting device 6.y,
- three valves 13.1, 13.2, 13.3 in the three tractor-mounted hydraulic lines 14.1, 14.2, 14.3 - one valve per line wherein every valve 13.1, 13.2, 13.3 can close the assigned line,
- three parallel hydraulic lines 10.1, 10.2, 10.3 belonging to the implement 2 and guiding to the three driven implement parts 11.1, 11.2, 11.3,
- three connectors (end pieces) 9.1, 9.2, 9.3 mounted at the free ends of the three implement-mounted lines 10.1, 10.2, 10.3 - one connector per line,
- three pressure detection sensors 15.1, 15.2, 15.3 in or at the implement-mounted hydraulic lines 10.1, 10.2, 10.3 - one pressure detection sensor 15.1, 15.2, 15.3 per implement-mounted hydraulic line 10.1, 10.2, 10.3,
- a control unit 7 of the tractor 1,
- a control unit 12 of the implement 2, and
- an evaluating unit 20 mounted on board of the implement 2 and arranged to evaluate signals from the pressure detection sensors 15.1, 15.2, 15.3 and to transmit signals to the implement control unit 12.

In the embodiment every connector 9.1, 9.2, 9.3 of the implement 2 can be connected with every connecting device 6.1, 6.2, 6.3 of the tractor 1 - of course only one connector 9.x with one connecting device 6.y per time.

Of course it is possible that a smaller or larger number of hydraulic lines 10.x with connectors 9.x on board of the implement 2 or a smaller or larger number of connecting devices 6.y on board of the tractor 1 are used. The number of tractor-mounted connecting devices 6.y can differ from the number of implement-mounted connectors 9.x. It is also possible that one line 10.x supplies several implement parts 11.x1, 11.x2 with fluid.

During operation the tractor control unit 7 selects and activates at least one hydraulically driven implement part 11.x. In the embodiment every implement part 11.x is activated as follows:
- The implement part 11.x is connected with the fluid source 3 via the following fluid connection: assigned implement-mounted hydraulic line 10.x, connector 9.x of the line 10.x, a connection device 6.y currently connected with the connector 9.x, and the tractor-mounted hydraulic line 14.y wherein the assigned valve 13.y is open.
- By applying the detection method describe below the tractor control unit 7 "knows" what connecting device 6.y is currently connected with the connector 9.x.
- The tractor control unit 7 opens the tractor-mounted valve 13.y in the line 14.y guiding to this connecting device 6.y.
- Fluid is ejected out of the fluid source 3 and is guided from the fluid source 3 via the line 14.y, the connecting device 6.y, the connector 9.x, and the line 10.x to the selected implement part 11.x. The implement part 11.x is moved by the pressurized supplied fluid.

In the following the detection method of the embodiment is described. This detection method is performed after the human operator has connected every implement-mounted connector 9.1, 9.2, ... with a mechanically mating connecting device 6.1, 6.2, .... In the embodiment the operator can arbitrarily connect the connectors with the connecting devices.

In one implementation every pressure detection sensor 15.1, 15.2, 15.3 is implemented as a pressure valve which is positioned in the respective implement-mounted hydraulic line 10.1, 10.2, 10.3. If hydraulic pressure is applied to the line 10.1, 10.2, 10.3, the respective pressure valve 15.1, 15.2, 15.3 is triggered and generates a pressure detection signal serving as a fluid supply detection signal. It is possible but not necessary that the pressure valve 15.1, 15.2, 15.3 opens the assigned hydraulic line 10.1, 10.2, 10.3 while the connection detection is performed. It is also possible that every pressure valve 15.1, 15.2, 15.3 remains closed while the detection method is performed. After having finished the detection method the implement control unit 12 preferably opens every implement-mounted valve 15.1, 15.2, ...

In one embodiment the pressure detection sensor 15.1, 15.2, 15.3 measures the achieved hydraulic pressure. The fluid supply detection signal for this line 10.1, 10.2, 10.3 is generated if the measured pressure is above a given threshold.

The evaluating unit 20 receives signals from the pressure detection sensors 15.1, 15.2, 15.3 and automatically evaluates these received signals. The evaluating unit 20 generates output signals depending on the received sensor signals and transmits the automatically generated output signals to the implement control unit 12. The implement control unit 12 receives output signals which are transmitted from the evaluating unit 20. The implement-mounted sensors 15.1, 15.2, 15.3, the evaluation unit 20, and the implement control unit 12 are preferably connected by means of a data bus, e.g. a CAN bus, or by point-to-point data connections.

The implement control unit 12 transmits received output signals to the tractor control unit 7. The tractor control unit 7 and the implement control unit 12 are connected via a data connection, e.g. a connection according to the ISObus standard (ISO 11783). This connection is sketched in Fig. 1. The connection can be established by means of a wired data connection to be established by the operator or in a wireless manner.

The tractor control unit 7 generates control inputs for the controllable valves 13.1, 13.2, 13.3 in the tractor-mounted hydraulic lines 14.1, 14.2, 14.3. Every control input opens or closes at least one valve 13.1, 13.2, 13.3. In one implementation the tractor control unit 7 switches off the pump 5 if all valves 13.1, 13.2, 13.3 are closed. The tractor control unit 7 switches on the pump 5 if it at least one valve 13.1, 13.2, 13.3 is open or is to be opened. A fluid connection between the fluid source 3 and a connecting device 6.x is established by the event that the valve 13.x in the corresponding tractor-mounted hydraulic line 14.x is opened. It is possible that the tractor control unit 7 generates a confirmation message which is transmitted to the implement control unit 12.

When the implement 2 has just been connected with the tractor 1, all controllable valves 13.1, 13.2, 13.3 are closed. Before starting the required agricultural functions, a human operator manually connects the implement-mounted connectors 9.1, 9.2, 9.3 with mechanically mating tractor-mounted connecting devices 6.1, 6.2, 6.3. These connecting devices 6.1, 6.2, 6.3 serve as hydraulic pressure supply connecting devices for the implements parts 11.1, 11.2, 11.3.

Different colors may help the operator to connect the connectors with the proper connecting devices. But the invention does not require using such colors. It is also possible that the operator connects the connectors 9.1, 9.2, ... with the connecting devices 6.1, 6.2, ... randomly or such that the lowest mechanical tension or stress is applied to the hydraulic lines 10.1, 10.2, ... The control unit 7 automatically detects the created hydraulic connections between connectors and connecting devices.

As soon as the operator has connected the connectors with the connecting devices, the following steps are performed automatically for every tractor-mounted connecting device 6.1, 6.2, 6.3 - for one connecting device 6.x after the other:
- The tractor control unit 7 selects the connecting device 6.x for being pressurized on a trial base.
- The tractor control unit 7 opens the corresponding valve 13.x in the tractor-mounted hydraulic line 14.x guiding from the fluid source 3 to the selected connecting device 6.x. The other tractor-mounted valves 13.z (z ≠ x) remain closed.
- The fluid source 3 ejects fluid into the lines 14.1, 14.2, 14.3. Fluid is guided through the opened valve 13.x to the selected connecting device 6.x, i.e. the selected connecting device 6.x is pressurized. Thanks to the closed further valves the further connecting devices 6.z (z ≠ x) are not supplied with fluid.
- Later the tractor control unit 7 closes the valve 13.x again.

It is also possible that the valves 13.1, 13.2, 13.3 are arranged in the interior of the connecting devices 6.1, 6.2, 6.3.

Either exactly one connector 9.y is currently connected with the selected connecting device 6.x. Or no connector is currently connected with the selected connecting device 6.x - it is possible that there are more connecting devices than connectors or that the operator did not connect every connector with a connecting device.

In the case that the connecting device 6.x is in fact connected with an implement-mounted connector 9.y, fluid is guided from the fluid source 3 through the connecting device 6.x, the connector 9.y, and the corresponding implement-mounted hydraulic line 10.y to the corresponding pressure detection sensor 15.y. The assigned pressure detection sensor 15.y in the implement-mounted hydraulic line 10.y is triggered and generates a pressure detection signal. This pressure detection signal is transmitted to the evaluating unit 20. The evaluating unit 20 detects the pressure detection signal and further detects automatically what pressure detection sensor 15.y has generated this pressure detection signal.

In one implementation the evaluating unit 20 has one specific signal input port for every pressure detection sensor 15.z and detects that signal input port over which the pressure detection signal is transmitted. In Fig. 1 three signal input ports for the three exemplary sensors 15.1, 15.2, 15.3 are shown.

In a further implementation (not shown) every pressure detection sensor 15.z (z = 1, 2, ...) has a unique identifier which distinguishes this pressure detection sensor 15.z from every other pressure detection sensor - at least from every other pressure detection sensor assigned to a hydraulic line 10.1, 10.2, ... on board of the implement 2. The pressure detection sensor 15.1, 15.2, 15.3 generates a pressure detection signal which includes the own identifier, i.e. the identifier of that pressure detection sensor 15.1, 15.2, 15.3 having generated the signal. This pressure detection signal including the sensor identifier is transmitted to the evaluating unit 20 via a data bus, e.g. a CAN bus, or via a point-to-point connection on board of the implement 2 or via a wireless connection. The sensor identifier enables the evaluating unit 20 to identify that sensor 15.y which has generated the fluid supply detection signal. This implementation only needs one signal input port for the evaluating unit 20.

Preferably every other pressure detection sensor 15.z (z ≠ y) generates a non-detection signal in the case that no fluid pressure is detected in the assigned hydraulic line 10.z. This implementation enables that the evaluating unit 20 automatically detects a faulty pressure detection sensor which does not transmit signals or transmits wrong signals. If several pressure detection sensors simultaneously generate pressure detection signals, one sensor may malfunction. The evaluating unit 20 can further detect an undesired interruption of a signal transfer. The evaluating unit 20 distinguishes the case of a faulty pressure detection sensor or a faulty interruption from the non-faulty case that no connector 9.1, 9.2, ... is connected with the selected connecting device 6.x. In this case every pressure detection sensor 15.1, 15.2, ... delivers a non-detecting signal.

When receiving exactly one pressure detection signal, the evaluating unit 20 generates a fluid supply detection signal including an included identifier of the sending pressure detection sensor 15.y. This sensor identifier distinguishes the triggered and sending pressure detection sensor 15.y from every other pressure detection sensor 15.z (z ≠ y). Preferably the evaluating unit 20 generates a non-detection signal - provided that every pressure detection signal has provided a non-detection signal.

The generated fluid supply detection signal including an included identifier or the generated non-detection signal is transmitted to the implement control unit 12. The implement control unit 12 evaluates the signals received from the evaluating unit 20.

In one implementation the implement control unit 12 generates a fluid supply detection signal including the sensor identifier of that pressure detection sensor 15.y which has detected pressure in the corresponding hydraulic line 10.y - or a non-detection signal.

In a further implementation the implement control unit 12 generates either a non-detection signal or a fluid supply detection signal including the identifier of an implement part 11.y which is currently supplied with fluid on a trial base. In one implementation the part identifier can distinguish this part item from all other parts on this implement 2.

In a preferred embodiment the part identifier comprises data characterizing the part, e.g. specifying a required hydraulic pressure or the time span over which hydraulic pressure has to be supplied. Two part items of the same part type or performing the same part function can have the same part identifier and the same characterizing data.

For including the part identifier into the fluid supply detection signal the implement control unit 12 evaluates a computer-accessible implement-mounted table providing a correspondence between the pressure detection sensors 15.1, 15.2, ... and the corresponding implement parts 11.1, 11.2, ... Preferably this table is created before the first operation of the implement 2 takes place, namely when the pressure detection sensor 15.1, 15.2, ..., the hydraulic lines 10.1, 10.2, ..., and the parts 11.1, 11.2, ... on board of the implement 2 are connected with each other. The table is updated if this connection is amended or if a pressure detection sensor 15.1, 15.2, ... is replaced with a further one.

The evaluating unit 20 uses the identifier of the sensor 15.y which has detected a fluid connection as an entry into the table and obtains an identifier of the implement part 11.y connected with this sensor 15.y. The evaluating unit 20 generates a fluid supply detection signal including an identifier for the identified part 11.y. This fluid supply detection signal including the identifier for the identified part 11.y is transmitted to the implement control unit 12 and further to the tractor control unit 7. The tractor control unit 7 obtains this signal and automatically concludes that the implement part 11.y is connected with the currently selected and pressurized connecting device 6.x.

Preferably the implement control unit 12 generates a non-detection signal if no pressure detection signal was transmitted to the evaluating unit 20.

In one implementation the tractor control unit 7 uses the transmitted fluid supply detection signals for automatically creating a tractor-mounted assignment table which assigns to every implement part 11.y the currently connected tractor-mounted connecting device 6.x. In the example of Fig. 1 this generated assignment table looks as follows:

| *implement part* | *tractor-mounted connection device* |
|---|---|
| 11.1 | 6.1 |
| 11.2 | 6.2 |
| 11.3 | 6.3 |

This assignment table is automatically created after the connections between connectors 9.y and connecting devices 6.x are established during the detection method and before the implement 2 is operated.

During operation the assignment table is used as follows: If the tractor control unit 7 selects the implement part 11.y as to be supplied with fluid, the tractor control unit 7 determines the connected connecting device 6.x by evaluating the assignment table. The implement parts are the entries into this table. The tractor control unit 7 triggers the step that this connecting device 6.x is pressurized. In one implementation the control unit 7 opens the valve 13.x in the hydraulic line 14.x guiding from the fluid source 3 to the identified connecting device 6.x or in the connecting device 6.x itself.

The tractor control unit 7 also uses this tractor-mounted assignment table for deactivating an implement part 11.y.

An activation of the implement part 11.y can be demanded by the operator or automatically be triggered by the tractor control unit 7 executing a control program. It is also possible that the implement control unit 12 triggers the activation of the implement part 11.y and sends a control input request to the tractor control unit 7 via the data connection. This control input request comprises an identifier of the implement part 11.y. As a response the tractor control unit 7 pressurizes the connected connection device 6.x. It is possible that the tractor control unit 7 generates a request message for the operator and pressurizes the connection device 6.x after having obtained a releasing input from the operator.

In one implementation the amount of fluid required for driving an implement part 11.y depends on the kind of the implement part 11.y. In this implementation the tractor control unit 7 determines the required fluid pressure by determining the kind of the part 11.y and pressurizes the assigned and connected connecting device 6.x with this pressure amount. This kind is determined by evaluating the tractor-mounted assignment table. The assignment table is created by evaluating the characterizing data included into the pressure detection signals.

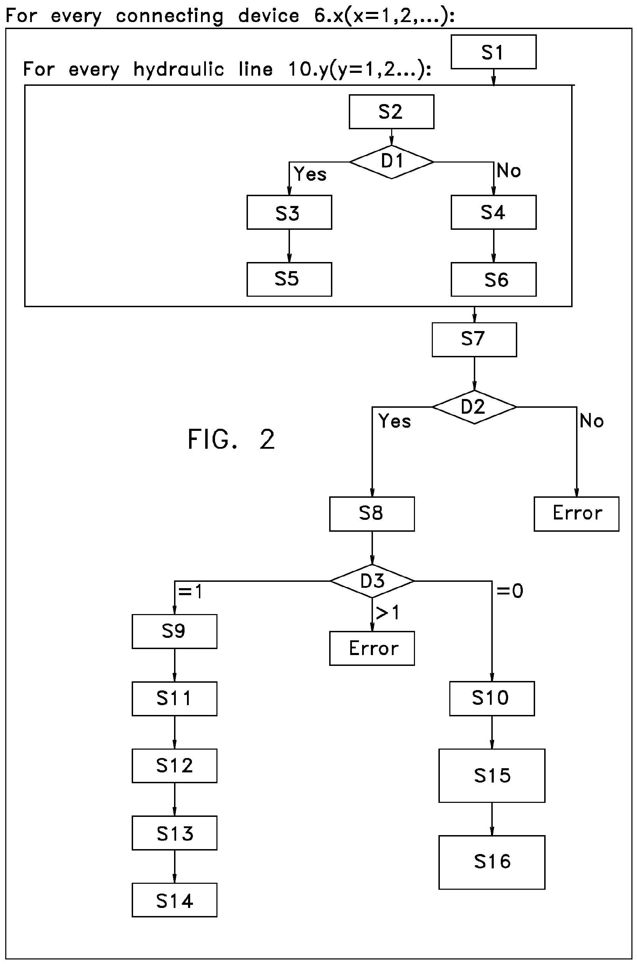

Fig. 2 shows the operation of the control units 7, 12 and the detection device 15.1, 15.2, 15.3, 20 by means of a flow diagram. The reference signs in Fig. 2 have the following meanings wherein S denotes a step and D a decision:

| | |
|---|---|
| S1 | tractor control unit 7 selects connecting device 6.x, opens valve 13.x and closes the other valves 13.z (z ≠ x) such that selected connecting device 6.x is supplied with pressurized fluid |
| S2 | assigned pressure detection sensor 15.y determines whether or not hydraulic pressure is present in implement-mounted hydraulic line 10.y. |
| S3 | pressure detection sensor 15.y generates pressure detection signal including identifier for this pressure detection sensor 15.y. |
| S4 | pressure detection sensor 15.y generates non-detecting signal including identifier for this pressure detection sensor 15.y. |
| S5 | fluid supply detection signal including sensor identifier for 15.y is transmitted to evaluating unit 20. |
| S6 | non-detection signal including sensor identifier for 15.y is transmitted from sensor 15.y to evaluating unit 20. |
| S7 | evaluating unit 20 counts number of incoming signals from pressure detection sensors 15.1, 15.2, 15.3 |
| S8 | evaluating unit 20 evaluates received signals from the pressure detection sensors 15.1, 15.2, ... |
| S9 | evaluating unit 20 evaluates implement-mounted table and detects identifier of part 11.y connected with line 10.y to which pressure detection sensor 15.y sending the only pressure detection signal is assigned |
| S10 | evaluating unit 20 generates non-detection signal |
| S11 | evaluating unit 20 generates fluid detection connection signal including identifier of connected implement part 11.y. |
| S12 | fluid supply detection signal including part identifier for 11.y is transmitted from evaluating unit 20 to implement control unit 12 |
| S13 | fluid supply detection signal including part identifier for 11.y is transmitted from implement control unit 12 to tractor control unit 7 |
| S14 | control unit 7 adds the assignment 6.x to 11.y in the tractor-mounted assignment table |
| S15 | non-detection signal is transmitted from evaluating unit 20 to implement control unit 12 |
| S16 | non-detection signal is transmitted from implement control unit 12 to tractor control unit 7 |
| D1 | hydraulic pressure in line 10.y detected by pressure sensor 15.y? |
| D2 | has every pressure detection sensor 15.y transmitted a signal to evaluating unit 20? |
| D3 | pressure detection signal obtained from how many pressure detection sensors 15.y? |

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**8. LIST OF REFERENCE SIGNS**

| | |
|---|---|
| 1 | tractor |
| 2 | implement |
| 3 | fluid source, comprises the reservoir 4 and the pump 5 |
| 4 | reservoir for hydraulic fluid |
| 5 | hydraulic pump, propelled by the tractor motor 21, ejects hydraulic fluid out of the reservoir 4 |
| 6.1, 6.2, 6.3 | connecting devices mounted at the rear wall of the tractor 1 |
| 7 | control unit of the tractor 1 |
| 8 | user terminal of the tractor 1, includes an operating device |
| 9.1, 9.2, 9.3 | connectors (end pieces) of the implement-mounted hydraulic lines 10.1, 10.2, 10.3 |
| 10.1, 10.2, 10.3 | implement-mounted hydraulic lines, guiding to the hydraulically driven implement parts 11.1, 11.2, 11.3 |
| 11.1, 11.2, 11.3 | hydraulically driven implement parts, supplied via the hydraulic lines 10.1, 10.2, 10.3 |
| 12 | control unit of the implement 2 |
| 13.1, 13.2, 13.3 | controllable valves in the tractor-mounted hydraulic lines 14.1, 14.2, 14.3 |
| 14.1, 14.2, 14.3 | tractor-mounted hydraulic lines, connect the fluid source 3 with the connecting devices 6.1, 6.2, 6.3 |
| 15.1, 15.2, 15.3 | pressure detection sensors in the implement-mounted hydraulic lines 10.1, 10.2, 10.3 |
| 20 | evaluating unit of the detection device |
| 21 | tractor motor, drives the pump 5 |

## Claims

1. Hydraulic system for use on board of an agricultural machine (1, 2), wherein the hydraulic system comprises
- at least one hydraulic fluid source (3),
- a plurality of connecting devices (6.1, 6.2, 6.3),
- at least one hydraulic line (10.1, 10.2, 10.3),
- a control unit (7, 12), and
- a detection device (15.1, 15.2, 15.3, 20),
wherein for every connecting device (6.1, 6.2, 6.3) of the plurality a fluid connection between this connecting device (6.1, 6.2, 6.3) and the or at least one fluid source (3) can be established and
wherein the or every hydraulic line (10.1, 10.2, 10.3) is connectable and disconnectable with several connecting devices (6.1, 6.2, 6.3) of the plurality, one device per time,
wherein
- establishing a fluid connection between a connecting device (6.1, 6.2, 6.3) and the or one fluid source (3) and
- connecting the or one hydraulic line (10.1, 10.2, 10.3) with this connecting device (6.1, 6.2, 6.3)
establishes a fluid connection between
- the fluid source (3) and
- this hydraulic line (10.1, 10.2, 10.3), and
wherein the control unit (7, 12) is arranged to automatically identify that connecting device (6.1, 6.2, 6.3) which is in fact connected with the hydraulic line (10.1, 10.2, 10.3)
by evaluating signals received from the detection device (15.1, 15.2, 15.3, 20), **characterized in that**
the control unit (7, 12) is arranged
- to subsequently select every connecting device (6.1, 6.2, 6.3) of the plurality and
- to establish a fluid connection between the or at least one fluid source (3) and the selected connecting device (6.1, 6.2, 6.3),
wherein the detection device (15.1, 15.2, 15.3, 20) is arranged
- to detect whether or not the or one hydraulic line (10.1, 10.2, 10.3) is supplied with fluid and
- to generate a fluid supply detection signal in case of detecting fluid supply, and
wherein the control unit (7, 12) is arranged to identify as the connected connection device
that connecting device (6.1, 6.2, 6.3) which is selected when the or at least one fluid supply detection signal is received from the detection device (15.1, 15.2, 15.3, 20).

2. Hydraulic system according to claim 1,
**characterized in that**
the hydraulic line (10.1, 10.2, 10.3) is connected or is connectable with a machine part (11.1, 11.2, 11.3) to be supplied with fluid,
wherein the control unit (7, 12) is arranged
- to trigger the supply of fluid to the machine part (11.1, 11.2, 11.3)
- by triggering the supply of fluid from the or at least one fluid source (3) to the identified connecting device (6.1, 6.2, 6.3).

3. Hydraulic system according to one of the preceding claims,
**characterized in that**
the hydraulic system comprises at least one fluid supply detection sensor (15.1, 15.2, 15.3),
wherein the fluid supply detection sensor (15.1, 15.2, 15.3) is arranged to detect whether or not the or one hydraulic line (10.1, 10.2, 10.3) is supplied with fluid,
wherein the detection device (15.1, 15.2, 15.3, 20) is arranged to detect whether or not the or one hydraulic line (10.1, 10.2, 10.3) is supplied with fluid,
by detecting whether or not the fluid supply detection sensor (15.1, 15.2, 15.3) has detected the presence of fluid supply in this hydraulic line (10.1, 10.2, 10.3), and
wherein the detection device (15.1, 15.2, 15.3, 20) is further arranged to include into the generated fluid supply detection signal an identifier of that fluid supply detection sensor (15.1, 15.2, 15.3) which has detected fluid supply.

4. Hydraulic system according to one of the preceding claims,
**characterized in that**
the hydraulic system comprises a plurality of hydraulic lines (10.1, 10.2, 10.3),
wherein every hydraulic line (10.1, 10.2, 10.3) of the plurality
- is connected or connectable with a machine part (11.1, 11.2, 11.3) to be supplied with fluid and
- is connectable and disconnectable with at least one connecting device (6.1, 6.2, 6.3) of the connecting device plurality,
wherein the detection device (15.1, 15.2, 15.3, 20) is arranged
- to detect for every hydraulic line (10.1, 10.2, 10.3) of the plurality whether or not this hydraulic line (10.1, 10.2, 10.3) is supplied with fluid and
- in the case that fluid supply for a hydraulic line (10.1, 10.2, 10.3) of the plurality is detected
- to generate a fluid supply detection signal and to include into the generated signal an identifier of that part (11.1, 11.2, 11.3) which is connected with that hydraulic line (10.1, 10.2, 10.3), and
wherein the control unit (7, 12) is arranged
- to automatically identify every connecting device (6.1, 6.2, 6.3) connected with a hydraulic line (10.1, 10.2, 10.3) and
- to automatically detect which connecting device (6.1, 6.2, 6.3) is connected with what machine part (11.1, 11.2, 11.3)
- by evaluating the or every received fluid supply detection signal including the part identifier.

5. Hydraulic system according to claim 4,
**characterized in that**
the hydraulic system comprises for every hydraulic line (10.1, 10.2, 10.3) of the plurality an assigned fluid supply detection sensor (15.1, 15.2, 15.3),
wherein every fluid supply detection sensor (15.1, 15.2, 15.3) is arranged to detect whether or not that hydraulic line (10.1, 10.2, 10.3) is supplied with fluid to which the fluid supply detection sensor (15.1, 15.2, 15.3) is assigned, and
wherein the detection device (15.1, 15.2, 15.3, 20) is arranged to detect for every hydraulic line (10.1, 10.2, 10.3) whether or not this hydraulic line (10.1, 10.2, 10.3) is supplied with fluid
by detecting whether or not the assigned fluid supply detection sensor (15.1, 15.2, 15.3) has detected the presence of fluid supply in this hydraulic line (10.1, 10.2, 10.3).

6. Hydraulic system according to claim 5,
**characterized in that**
the detection device (15.1, 15.2, 15.3, 20) is arranged to include into the generated fluid supply detection signal as the part identifier
an identifier of that fluid supply detection sensor (15.1, 15.2, 15.3) which has detected fluid supply in the assigned hydraulic line (10.1, 10.2, 10.3).

7. Hydraulic system according to claim 4,
**characterized in that**
the hydraulic system comprises one fluid supply detection sensor,
wherein the detection device is arranged
- to assign the fluid supply detection sensor to at least two hydraulic lines (10.1, 10.2, 10.3) - one line after the other - and
- is arranged to detect to what hydraulic line (10.1, 10.2, 10.3) the fluid supply detection sensor is assigned
when the fluid supply detection sensor detects the presence of fluid supply.

8. Hydraulic system according to one of the claims 4 to 6,
**characterized in that**
the detection device (15.1, 15.2, 15.3, 20) has access to a computer-accessible table
which assigns to every machine part (11.1, 11.2, 11.3) to be supplied with fluid the fluid supply detection sensor (15.1, 15.2, 15.3) assigned to that hydraulic line (10.1, 10.2, 10.3) connected with this machine part (11.1, 11.2, 11.3),
wherein the detection device (15.1, 15.2, 15.3, 20) is arranged to evaluate the table for including the part identifier.

9. Hydraulic system according to one of the claims 4 to 8,
**characterized in that**
the control unit (7, 12) is arranged to automatically generate a computer-accessible assignment table by evaluating signals from the detection device (15.1, 15.2, 15.3, 20),
wherein the generated assignment table assigns
to every hydraulically driven machine part (11.1, 11.2, 11.3)
either that connecting device (6.1, 6.2, 6.3) which is in fact connected with that hydraulic line (10.1, 10.2, 10.3) which is connected with this machine part (11.1, 11.2, 11.3) or
the information that this machine part (11.1, 11.2, 11.3) is not in fluid connection with a connecting device (6.1, 6.2, 6.3).

10. Hydraulic system according to one of the preceding claims,
**characterized in that**
the or every fluid source (3) comprises a hydraulic pressure generator (5),
wherein the detection device (15.1, 15.2, 15.3, 20) comprises a pressure detection sensor (15.1, 15.2, 15.3),
wherein the hydraulic pressure generator (5) is arranged to eject under pressure fluid out of the fluid source (3) and
wherein the pressure detection sensor (15.1, 15.2, 15.3) is arranged to detect whether or not hydraulic pressure is present in the or at least one hydraulic line (10.1, 10.2, 10.3), and
wherein the detection device (15.1, 15.2, 15.3, 20) is arranged to generate the or at least one fluid supply detection signal in case of detecting hydraulic pressure.

11. Hydraulic system according to claim 10,
**characterized in that**
the hydraulic system comprises a plurality of valves (13.1, 13.2, 13.3) which are positioned between
- the fluid source (3) and
- the plurality of connecting devices (6.1, 6.2, 6.3),
wherein the control unit (7, 12) is arranged to establish a fluid connection between the fluid source (3) and a selected connecting device (6.1, 6.2, 6.3) by opening one valve (13.1, 13.2, 13.3) and transferring or keeping every further valve in a closed state.

12. Agricultural combination comprising
- a pulling vehicle (1),
- an implement (2), and
- a hydraulic system according to one of the preceding claims,
wherein the implement (2) is at least temporarily mechanically connected with the pulling vehicle (1),
wherein the plurality of connecting devices (6.1, 6.2, 6.3) and the or at least one fluid source (3) are mounted on board of the pulling vehicle (1), and
wherein the or every hydraulic line (10.1, 10.2, 10.3) and the detection device (15.1, 15.2, 15.3, 20) are mounted on board of the implement (2).

13. Agricultural combination according to claim 12,
**characterized in that**
the control unit (7, 12) comprises
- a vehicle controller (7) mounted on board of a vehicle (1) and
- an implement controller (12) mounted on board of the implement (2),
wherein the implement controller (12) is in data connection with the detection device (15.1, 15.2, 15.3, 20),
wherein the vehicle controller (7) is in data connection with the implement controller (12), and
wherein the vehicle controller (7) is arranged
- to select a connecting device (6.1, 6.2, 6.3) and
- to establish the fluid connection between the or one fluid source (3) and the selected connecting device (6.1, 6.2, 6.3).

14. Method for detecting a fluid connection in a hydraulic system of an agricultural machine (1, 2),
wherein the hydraulic system comprises
- at least one hydraulic fluid source (3),
- a plurality of connecting devices (6.1, 6.2, 6.3),
- at least one hydraulic line (10.1, 10.2, 10.3),
- a control unit (7, 12), and
- a detection device (15.1, 15.2, 15.3, 20),
wherein the or every hydraulic line (10.1, 10.2, 10.3) is connectable with and disconnectable from several connecting devices (6.1, 6.2, 6.3) of the plurality, one device per time, and
wherein the method comprises the steps that
- the or at least one hydraulic line (10.1, 10.2, 10.3) is connected with one connecting device (6.1, 6.2, 6.3) of the plurality and
- a fluid connection between the or one fluid source (3) and this connecting device (6.1, 6.2, 6.3) is established
such that a fluid connection between the or at least one fluid source (3) and the hydraulic line (10.1, 10.2, 10.3) which is in fact connected with the connecting device (6.1, 6.2, 6.3) is established, and
wherein the method comprises the further step that
the control unit (7, 12) automatically identifies that connecting device (6.1, 6.2, 6.3) which is in fact connected with the hydraulic line (10.1, 10.2, 10.3) by receiving and evaluating signals from the detection device (15.1, 15.2, 15.3, 20),
**characterized in that**
the method comprises the further steps that
the control unit (7, 12) subsequently
- selects every connecting device (6.1, 6.2, 6.3) of the plurality and
- establishes at least temporarily a fluid connection between the or at least one fluid source (3) and the currently selected connecting device (6.1, 6.2, 6.3),
the detection device (15.1, 15.2, 15.3, 20)
- detects whether or not the or at least one hydraulic line (10.1, 10.2, 10.3) is supplied with fluid and
- generates a fluid supply detection signal in the case of detecting fluid supply, and
the control unit (7, 12) identifies as the connected connecting device that connecting device (6.1, 6.2, 6.3) which is selected when the fluid supply detection signal is received from the detection device (15.1, 15.2, 15.3, 20).

15. Fluid connection detecting method according to claim 14,
**characterized in that**
the step that the detection device (15.1, 15.2, 15.3, 20) detects whether or not the hydraulic line (10.1, 10.2, 10.3) is supplied with fluid comprises the step that
a fluid supply detection sensor (15.1, 15.2, 15.3) detects whether or not the hydraulic line (10.1, 10.2, 10.3) is supplied with fluid,
the step that the detection device (15.1, 15.2, 15.3, 20) generates a fluid supply detection signal comprises the step that
the detection device (15.1, 15.2, 15.3, 20) includes into the generated fluid supply detection signal an identifier of that fluid supply detection sensor (15.1, 15.2, 15.3) which has detected fluid supply.

16. Fluid connection detecting method according to claim 14 or claim 15,
**characterized in that**
the hydraulic system comprises a plurality of hydraulic lines (10.1, 10.2, 10.3), wherein every hydraulic line (10.1, 10.2, 10.3) of the plurality is connectable with and disconnectable from with at least one machine part (11.1, 11.2, 11.3) to be supplied with fluid,
wherein the method comprises the further steps that
- a first hydraulic line (10.1) is connected with a first connecting device (6.1) and
- at least one further hydraulic line (10.2, 10.3) is connected with a further connecting device (6.2, 6.3),
wherein the method comprises the further steps that
the detection device (15.1, 15.2, 15.3, 20) detects for every hydraulic line (10.1, 10.2, 10.3) of the plurality whether or not this hydraulic line is supplied with fluid,
in the case that fluid supply for a hydraulic line (10.1, 10.2, 10.3) is detected, the further steps are performed that
- the detection device (15.1, 15.2, 15.3, 20) generates a fluid supply detection signal,
- the detection device (15.1, 15.2, 15.3, 20) includes into the generated fluid supply detection signal an identifier of that machine part (11.1, 11.2, 11.3) which is connected with the hydraulic line (10.1, 10.2, 10.3) supplied with fluid,
- the control unit (7, 12) automatically identifies every connecting device (6.1, 6.2, 6.3) connected with a hydraulic line (10.1, 10.2, 10.3), and
- the control unit (7, 12) automatically detects which connecting device (6.1, 6.2, 6.3) is connected with what machine part (11.1, 11.2, 11.3) by evaluating the or every received fluid supply detection signal including the part identifiers.

17. Fluid connection detecting method according to 16,
**characterized in that**
the step that the detection device (15.1, 15.2, 15.3, 20) detects whether or not the or at least one hydraulic line (10.1, 10.2, 10.3) is supplied with fluid
comprises the step that the detection device (15.1, 15.2, 15.3, 20) determines whether or not a fluid supply detection sensor (15.1, 15.2, 15.3) assigned to this hydraulic line (10.1, 10.2, 10.3) detects fluid supply and
the step that the detection device (15.1, 15.2, 15.3, 20) includes an identifier of the part (11.1, 11.2, 11.3) connected with that hydraulic line (10.1, 10.2, 10.3) comprises the step that the detection device (15.1, 15.2, 15.3, 20) evaluates a computer-accessible table
which assigns to every machine part (11.1, 11.2, 11.3) to be supplied with fluid that fluid supply detection sensor (15.1, 15.2, 15.3) which is assigned to the hydraulic line (10.1, 10.2, 10.3) connected with this part (11.1, 11.2, 11.3).

## Patentansprüche

1. Hydrauliksystem zur Verwendung an Bord einer landwirtschaftlichen Maschine (1, 2), wobei das Hydrauliksystem Folgendes aufweist:
- mindestens eine Hydraulikfluidquelle (3),
- eine Mehrzahl von Verbindungseinrichtungen (6.1, 6.2, 6.3),
- mindestens eine Hydraulikleitung (10.1, 10.2, 10.3),
- eine Steuer- und/oder Regeleinheit (7, 12), und
- eine Detektionseinrichtung (15.1, 15.2, 15.3, 20),
wobei für jede Verbindungseinrichtung (6.1, 6.2, 6.3) der Mehrzahl eine Fluidverbindung zwischen dieser Verbindungseinrichtung (6.1, 6.2, 6.3) und der oder mindestens einer Fluidquelle (3) hergestellt werden kann und
wobei die oder jede Hydraulikleitung (10.1, 10.2, 10.3) mit mehreren Verbindungseinrichtungen (6.1, 6.2, 6.3) der Mehrzahl verbindbar oder von diesen trennbar ist, aber nur eine Vorrichtung zu einem Zeitpunkt, wobei
- das Herstellen einer Fluidverbindung zwischen einer Verbindungseinrichtung (6.1, 6.2, 6.3) und der oder einer Fluidquelle (3) und
- das Verbinden der oder einer Hydraulikleitung (10.1, 10.2, 10.3) mit dieser Verbindungseinrichtung (6.1, 6.2, 6.3)
eine Fluidverbindung zwischen
- der Fluidquelle (3) und
- dieser Hydraulikleitung (10.1, 10.2, 10.3)
herstellt, und
wobei die Steuer- und/oder Regeleinheit (7, 12) dazu angeordnet ist, automatisch diejenige Verbindungseinrichtung (6.1, 6.2, 6.3) zu identifizieren, die tatsächlich mit der Hydraulikleitung (10.1, 10.2, 10.3) verbunden ist,
indem sie von der Detektionseinrichtung (15.1, 5.2, 15.3, 20) empfangene Signale auswertet,
**dadurch gekennzeichnet, dass**
die Steuer- und/oder Regeleinheit (7, 12) dazu angeordnet ist,
- anschließend jede Verbindungseinrichtung (6.1, 6.2, 6.3) der Mehrzahl auszuwählen und
- eine Fluidverbindung zwischen der oder mindestens einer Fluidquelle (3) und der ausgewählten Verbindungseinrichtung (6.1, 6.2, 6.3) herzustellen,
wobei die Detektionseinrichtung (15.1, 15.2, 15.3, 20) dazu angeordnet ist,
- zu detektieren, ob die oder eine Hydraulikleitung (10.1, 10.2, 10.3) mit Fluid versorgt wird, und
- im Fall eines Detektierens einer Fluidversorgung ein Fluidversorgungs-Detektionssignal zu erzeugen, und
wobei die Steuer- und/oder Regeleinheit (7, 12) dazu angeordnet ist, diejenige Verbindungseinrichtung (6.1, 6.2, 6.3) als die verbundene Verbindungseinrichtung zu identifizieren, die ausgewählt wird, wenn das oder mindestens ein Fluidversorgungs-Detektionssignal von der Detektionseinrichtung (15.1, 15.2, 15.3, 20) empfangen wird.

2. Hydrauliksystem nach Anspruch 1, **dadurch gekennzeichnet, dass**
die Hydraulikleitung (10.1, 10.2, 10.3) mit einem mit Fluid zu versorgenden Maschinenteil (11.1, 11.2, 11.3) verbunden oder verbindbar ist,
wobei die Steuer- und/oder Regeleinheit (7, 12) dazu angeordnet ist,
- die Fluidversorgung an den Maschinenteil (11.1, 11.2, 11.3) auszulösen,
- indem sie die Fluidversorgung von der oder mindestens einer Fluidquelle (3) an die identifizierte Verbindungseinrichtung (6.1, 6.2, 6.3) auslöst.

3. Hydrauliksystem nach einem der vorhergehenden Ansprüche, **dadurch gekennzeichnet, dass**
das hydraulische System mindestens einen Fluidversorgungs-Detektionssensor (15.1, 15.2, 15.3) aufweist,
wobei der Fluidversorgungs-Detektionssensor (15.1, 15.2, 15.3) dazu angeordnet ist, zu detektieren, ob die oder eine Hydraulikleitung (10.1, 10.2, 10.3) mit Fluid versorgt ist,
wobei die Detektionseinrichtung (15.1, 15.2, 15.3, 20) dazu angeordnet ist, zu detektieren, ob die oder eine Hydraulikleitung (10.1, 10.2, 10.3) mit Fluid versorgt ist,
indem sie detektiert, ob der Fluidversorgungs-Detektionssensor (15.1, 15.2, 15.3) die Anwesenheit einer Fluidversorgung in dieser Hydraulikleitung (10.1, 10.2, 10.3) detektiert hat, und
wobei die Detektionseinrichtung (15.1, 15.2, 15.3, 20) weiterhin dazu angeordnet ist, in das erzeugte Fluidversorgungs-Detektionssignal einen Identifikator desjenigen Fluidversorgungs-Detektionssensors (15.1, 15.2, 15.3) aufzunehmen, der eine Fluidversorgung detektiert hat.

4. Hydrauliksystem nach einem der vorhergehenden Ansprüche, **dadurch gekennzeichnet, dass**
das Hydrauliksystem eine Mehrzahl von Hydraulikleitungen (10.1, 10.2, 10.3) aufweist,
wobei jede Hydraulikleitung (10.1, 10.2, 10.3) der Mehrzahl
- mit einem mit Fluid zu versorgenden Maschinenteil (11.1, 11.2, 11.3) verbunden oder verbindbar ist und
- mit mindestens einer Verbindungseinrichtung (6.1, 6.2, 6.3) der Mehrzahl von Verbindungseinrichtungen verbindbar und von dieser trennbar ist,
wobei die Detektionseinrichtung (15.1, 15.2, 15.3, 20) dazu angeordnet ist,
- für jede Hydraulikleitung (10.1, 10.2, 10.3) der Mehrzahl zu detektieren, ob diese Hydraulikleitung (10.1, 10.2, 10.3) mit Fluid versorgt wird, und
- in dem Fall, dass eine Fluidversorgung für eine Hydraulikleitung (10.1, 10.2, 10.3) der Mehrzahl detektiert wird,
- ein Fluidversorgungs-Detektionssignal zu erzeugen und in das erzeugte Signal einen Identifikator des mit dieser Hydraulikleitung (10.1, 10.2, 10.3) verbundenen Teils (11.1, 11.2, 11.3) aufzunehmen, und
wobei die Steuer- und/oder Regeleinheit (7, 12) dazu angeordnet ist,
- automatisch jede mit einer Hydraulikleitung (10.1, 10.2, 10.3) verbundene Verbindungseinrichtung (6.1, 6.2, 6.3) identifizieren, und
- automatisch zu detektieren, welche Verbindungseinrichtung (6.1, 6.2, 6.3) mit welchem Maschinenteil (11.1, 11.2, 11.3) verbunden ist,
- indem sie das oder jedes empfangene Fluidversorgungs-Detektionssignal auswertet, das den Teil-Identifikator aufweist.

5. Hydrauliksystem nach Anspruch 4, **dadurch gekennzeichnet, dass**
das Hydrauliksystem für jede Hydraulikleitung (10.1, 10.2, 10.3) der Mehrzahl einen zugewiesenen Fluidversorgungs-Detektionssensor (15.1, 15.2, 15.3) aufweist,
wobei jeder Fluidversorgungs-Detektionssensor (15.1, 15.2, 15.3) dazu angeordnet ist, zu detektieren, ob diejenige Hydraulikleitung (10.1, 10.2, 10.3) mit Fluid versorgt ist, der der Fluidversorgungs-Detektionssensor (15.1, 15.2, 15.3) zugewiesen ist, und
wobei die Detektionseinrichtung (15.1, 15.2, 15.3, 20) dazu angeordnet ist, für jede Hydraulikleitung (10.1, 10.2, 10.3) zu detektieren, ob diese Hydraulikleitung (10.1, 10.2, 10.3) mit Fluid versorgt ist,
indem sie detektiert, ob der zugewiesene Fluidversorgungs-Detektionssensor (15.1, 15.2, 15.3) die Anwesenheit einer Fluidversorgung in dieser Hydraulikleitung (10.1, 10.2, 10.3) detektiert hat.

6. Hydrauliksystem nach Anspruch 5, **dadurch gekennzeichnet, dass**
die Detektionseinrichtung (15.1, 15.2, 15.3, 20) dazu angeordnet ist, einen Identifikator desjenigen Fluidversorgungs-Detektionssensors (15.1, 15.2, 15.3), der eine Fluidversorgung in der zugewiesenen Hydraulikleitung (10.1, 10.2, 10.3) detektiert hat, als den Teil-Identifikator in das erzeugte Fluidversorgungs-Detektionssignal aufzunehmen.

7. Hydrauliksystem nach Anspruch 4, **dadurch gekennzeichnet, dass**
das Hydrauliksystem einen Fluidversorgungs-Detektionssensor aufweist,
wobei die Detektionseinrichtung dazu angeordnet ist,
- dem Fluidversorgungs-Detektionssensor mindestens zwei Hydraulikleitungen (10.1, 10.2, 10.3) - einer Leitung nach der anderen - zuzuweisen und
- zu detektieren, welcher Hydraulikleitung (10.1, 10.2, 10.3) der Fluidversorgungs-Detektionssensor zugewiesen ist,
wenn der Fluidversorgungs-Detektionssensor die Anwesenheit einer Fluidversorgung detektiert.

8. Hydrauliksystem nach einem der Ansprüche 4 bis 6, **dadurch gekennzeichnet, dass**
die Detektionseinrichtung (15.1, 15.2, 15.3, 20) Zugang zu einer computerlesbaren Tabelle hat, die jedem mit Fluid zu versorgenden Maschinenteil (11.1, 11.2, 11.3) den Fluidversorgungs-Detektionssensor (15.1, 15.2, 15.3) zuweist, der der mit diesem Maschinenteil (11.1, 11.2, 11.3) verbundenen Hydraulikleitung (10.1, 10.2, 10.3) zugewiesen ist,
wobei die Detektionseinrichtung (15.1, 15.2, 15.3, 20) dazu angeordnet ist, die Tabelle zum Aufnehmen des Teil-Identifikators auszuwerten.

9. Hydrauliksystem nach einem der Ansprüche 4 bis 8, **dadurch gekennzeichnet, dass** die Steuer- und/oder Regeleinheit (7, 12) dazu angeordnet ist, automatisch eine computerlesbare Zuweisungstabelle zu erstellen, indem sie Signale von der Detektionseinrichtung (15.1, 15.2, 15.3, 20) auswertet,
wobei die erzeugte Zuweisungstabelle jedem hydraulisch angetriebenen Maschinenteil (11.1, 11.2, 11.3) Folgendes zuweist:
entweder die Verbindungseinrichtung (6.1, 6.2, 6.3), die tatsächlich mit derjenigen Hydraulikleitung (10.1, 10.2, 10.3) verbunden ist, die mit diesem Maschinenteil (11.1, 11.2, 11.3) verbunden ist, oder
die Information, dass dieser Maschinenteil (11.1, 11.2, 11.3) nicht in Fluidverbindung mit einer Verbindungseinrichtung (6.1, 6.2, 6.3) steht.

10. Hydrauliksystem nach einem der vorhergehenden Ansprüche, **dadurch gekennzeichnet, dass**
die oder jede Fluidquelle (3) einen hydraulischen Druckgenerator (5) aufweist,
wobei die Detektionseinrichtung (15.1, 15.2, 15.3, 20) einen Druckdetektionssensor (15.1, 15.2, 15.3) aufweist,
wobei der hydraulische Druckgenerator (5) dazu angeordnet ist, unter Druck Fluid aus der Fluidquelle (3) auszustoßen, und
wobei der Druckdetektionssensor (15.1, 15.2, 15.3) dazu angeordnet ist, zu detektieren, ob ein hydraulischer Druck in der oder mindestens einer Hydraulikleitung (10.1, 10.2, 10.3) vorliegt, und wobei die Detektionseinrichtung (15.1, 15.2, 15.3, 20) dazu angeordnet ist, im Fall eines Detektierens eines hydraulischen Drucks das oder mindestens ein Fluidversorgungs-Detektionssignal zu erzeugen.

11. Hydrauliksystem nach Anspruch 10, **dadurch gekennzeichnet, dass**
das Hydrauliksystem eine Mehrzahl von Ventilen (13.1, 13.2, 13.3) aufweist,
die zwischen
- der Fluidquelle (3) und
- der Mehrzahl von Verbindungseinrichtung (6.1, 6.2, 6.3)
angeordnet sind,
wobei die Steuer- und/oder Regeleinrichtung (7, 12) dazu angeordnet ist, eine Fluidverbindung zwischen der Fluidquelle (3) und einer ausgewählten Verbindungseinrichtung (6.1, 6.2, 6.3) herzustellen,
indem sie ein Ventil (13.1, 13.2, 13.3) öffnet und jedes weitere Ventil in einen geschlossenen Zustand überführt oder in einem geschlossenen Zustand hält.

12. Landwirtschaftliches Gespann, mit:
- einem Zugfahrzeug (1),
- einem Werkzeug (2), und
- einem Hydrauliksystem nach einem der vorhergehenden Ansprüche,
wobei das Werkzeug (2) mindestens zeitweise mechanisch mit dem Zugfahrzeug (1) verbunden ist,
wobei die Mehrzahl von Verbindungseinrichtung (6.1, 6.2, 6.3) oder die oder mindestens eine Fluidquelle (3) an Bord des Zugfahrzeugs (1) montiert sind, und
wobei die oder jede Hydraulikleitung (10.1, 10.2, 10.3) und die Detektionseinrichtung (15.1, 15.2, 15.3, 20) an Bord des Werkzeugs (2) montiert sind.

13. Landwirtschaftliches Gespann nach Anspruch 12, **dadurch gekennzeichnet, dass** die Steuer- und/oder Regeleinheit (7, 12) Folgendes aufweist:
- einen an Bord des Fahrzeugs (1) montierten Fahrzeug-Controller (7) und
- einen an Bord des Werkzeugs (2) montierten Werkzeug-Controller (12),
wobei der Werkzeug-Controller (12) in Datenverbindung mit der Detektionseinrichtung (15.1, 15.2, 15.3, 20) steht,
wobei der Fahrzeug-Controller (7) in Datenverbindung mit dem Werkzeug-Controller (12) steht und
wobei der Werkzeug-Controller (7) dazu angeordnet ist,
- eine Verbindungseinrichtung (6.1, 6.2, 6.3) auszuwählen und
- die Fluidverbindung zwischen der oder einer Fluidquelle (3) und der ausgewählten Verbindungseinrichtung (6.1, 6.2, 6.3) herzustellen.

14. Verfahren zum Detektieren einer Fluidverbindung in einem Hydrauliksystem einer landwirtschaftlichen Maschine (1, 2), wobei das Hydrauliksystem Folgendes aufweist:
- mindestens eine Hydraulikfluidquelle (3),
- eine Mehrzahl von Verbindungseinrichtungen (6.1, 6.2, 6.3),
- mindestens eine Hydraulikleitung (10.1, 10.2, 10.3),
- eine Steuer- und/oder Regeleinheit (7, 12) und
- eine Detektionseinrichtung (15.1, 15.2, 15.3, 20),
wobei die oder jede Hydraulikleitung (10.1, 10.2, 10.3) mit mehreren Verbindungseinrichtungen (6.1, 6.2, 6.3) der Mehrzahl verbindbar und von diesen trennbar ist, aber nur eine Vorrichtung zu einem Zeitpunkt, und
wobei das Verfahren die Schritte aufweist, dass
- die oder mindestens eine Hydraulikleitung (10.1, 10.2, 10.3) mit einer Verbindungseinrichtung (6.1, 6.2, 6.3) der Mehrzahl verbunden wird und
- eine Fluidverbindung zwischen der oder einer Fluidquelle (3) und dieser Verbindungseinrichtung (6.1, 6.2, 6.3) hergestellt wird,
sodass eine Fluidverbindung zwischen der oder mindestens einer Fluidquelle (3) und der Hydraulikleitung (10.1, 10.2, 10.3), die tatsächlich mit der Verbindungseinrichtung (6.1, 6.2, 6.3) verbunden ist, hergestellt wird, und
wobei das Verfahren den weiteren Schritt aufweist, dass
die Steuer- und/oder Regeleinheit (7, 12) automatisch diejenige Verbindungseinrichtung (6.1, 6.2, 6.3) identifiziert, die tatsächlich mit der Hydraulikleitung (10.1, 10.2, 10.3) verbunden ist,
indem sie Signale von der Detektionseinrichtung (15.1, 15.2, 15.3, 20) empfängt und auswertet,
**dadurch gekennzeichnet, dass**
das Verfahren die weiteren Schritte aufweist, dass
die Steuer- und/oder Regeleinheit (7, 12) anschließend
- jede Anschlusseinrichtung (6.1, 6.2, 6.3) der Mehrzahl auswählt und
- mindestens zeitweise eine Fluidverbindung zwischen der oder mindestens einer Fluidquelle (3) und der momentan ausgewählten Verbindungseinrichtung (6.1, 6.2, 6.3) herstellt,
die Detektionseinrichtung (15.1, 15.2, 15.3, 20)
- detektiert, ob die oder mindestens eine Hydraulikleitung (10.1, 10.2, 10.3) mit Fluid versorgt wird, und
- im Fall eines Detektierens einer Fluidversorgung ein Fluidversorgungs-Detektionssignal erzeugt und
die Steuer- und/oder Regeleinheit (7, 12) als die verbundene Verbindungseinrichtung identifiziert diejenige Verbindungseinrichtung (6.1, 6.2, 6.3), die ausgewählt wird, wenn das Fluidversorgungs-Detektionssignal von der Detektionseinrichtung (15.1, 15.2, 15.3, 20) empfangen wird.

15. Fluidverbindungs-Detektionsverfahren nach Anspruch 14, **dadurch gekennzeichnet, dass**
der Schritt, dass die Detektionseinrichtung (15.1, 15.2, 15.3, 20) detektiert, ob die Hydraulikleitung (10.1, 10.2, 10.3) mit Fluid versorgt wird, den Schritt aufweist, dass
ein Fluidversorgungs-Detektionssensor (15.1, 15.2, 15.3) detektiert, ob die Hydraulikleitung (10.1, 10.2, 10.3) mit Fluid versorgt ist,
der Schritt, dass die Detektionseinrichtung (15.1, 15.2, 15.3, 20) ein Fluidversorgungs-Detektionssignal erzeugt, den Schritt aufweist, dass
die Detektionseinrichtung (15.1, 15.2, 15.3, 20) in das erzeugte Fluidversorgungs-Detektionssignal einen Identifikator desjenigen Fluidversorgungs-Detektionssensors (15.1, 15.2, 15.3) aufnimmt, der eine Fluidversorgung detektiert hat.

16. Fluidverbindungs-Detektionsverfahren nach Anspruch 14 oder Anspruch 15, **dadurch gekennzeichnet, dass**
das Hydrauliksystem eine Mehrzahl von Hydraulikleitungen (10.1, 10.2, 10.3) aufweist,
wobei jede Hydraulikleitung (10.1, 10.2, 10.3) der Mehrzahl mit mindestens einem mit Fluid zu versorgenden Maschinenteil (11.1, 11.2, 11.3) verbindbar und von diesen trennbar ist,
wobei das Verfahren die weiteren Schritte aufweist, dass
- eine erste Hydraulikleitung (10.1) mit einer ersten Verbindungseinrichtung (6.1) verbunden wird und
- mindestens eine weitere Hydraulikleitung (10.2, 10.3) mit einer weiteren Verbindungseinrichtung (6.2, 6.3) verbunden wird,
wobei das Verfahren die weiteren Schritte aufweist, dass
die Detektionseinrichtung (15.1, 15.2, 15.3, 20) für jede Hydraulikleitung (10.1, 10.2, 10.3) der Mehrzahl detektiert, ob diese Hydraulikleitung mit Fluid versorgt wird,
in dem Fall, dass eine Fluidversorgung für eine Hydraulikleitung (10.1, 10.2, 10.3) detektiert wird, die weiteren Schritte ausgeführt werden, dass
- die Detektionseinrichtung (15.1, 15.2, 15.3, 20) ein Fluidversorgungs-Detektionssignal erzeugt,
- die Detektionseinrichtung (15.1, 15.2, 15.3, 20) in das erzeugte Fluidversorgungs-Detektionssignal einen Identifikator desjenigen Maschinenteils (11.1, 11.2, 11.3) aufnimmt, der mit der Hydraulikleitung (10.1, 10.2, 10.3) verbunden ist, die mit Fluid versorgt wird,
- die Steuer- und/oder Regeleinheit (7, 12) automatisch jede mit einer Hydraulikleitung (10.1, 10.2, 10.3) verbundene Verbindungseinrichtung (6.1, 6.2, 6.3) identifiziert und
- die Steuer- und/oder Regeleinheit (7, 12) automatisch detektiert, welche Verbindungseinrichtung (6.1, 6.2, 6.3) mit welchem Maschinenteil (11.1, 11.2, 11.3) verbunden ist,
- indem sie das oder jedes empfangene Fluidversorgungs-Detektionssignal auswertet, das die Teil-Identifikatoren aufweist.

17. Fluidverbindungs-Detektionsverfahren nach 16, **dadurch gekennzeichnet, dass**
der Schritt, dass die Detektionseinrichtung (15.1, 15.2, 15.3, 20) detektiert, ob die oder mindestens eine Hydraulikleitung (10.1, 10.2, 10.3) mit Fluid versorgt wird,
den Schritt aufweist, dass die Detektionseinrichtung (15.1, 15.2, 15.3, 20) bestimmt, ob ein dieser Hydraulikleitung (10.1, 10.2, 10.3) zugewiesener Fluidversorgungs-Detektionssensor (15.1, 15.2, 15.3) eine Fluidversorgung detektiert, und
der Schritt, dass die Detektionseinrichtung (15.1, 15.2, 15.3, 20) einen Identifikator des mit dieser Hydraulikleitung (10.1, 10.2, 10.3) verbundenen Teils (11.1, 11.2, 11.3) aufnimmt,
den Schritt aufweist, dass die Detektionseinrichtung (15.1, 15.2, 15.3, 20) eine computerlesbare Tabelle auswertet,
die jedem mit Fluid zu versorgenden Maschinenteil (11.1, 11.2, 11.3) denjenigen Fluidversorgungs-Detektionssensor (15.1, 15.2, 15.3) zuweist, der der mit diesem Teil (11.1, 11.2, 11.3) verbundenen Hydraulikleitung (10.1, 10.2, 10.3) zugewiesen ist.

## Revendications

1. Système hydraulique à utiliser à bord d'une machine agricole (1, 2), dans lequel le système hydraulique comprend
- au moins une source de fluide hydraulique (3),
- une pluralité de dispositifs de raccordement (6.1, 6.2, 6.3),
- au moins une conduite hydraulique (10.1, 10.2, 10.3),
- une unité de commande (7, 12), et
- un dispositif de détection (15.1, 15.2, 15.3, 20),
dans lequel pour chaque dispositif de raccordement (6.1, 6.2, 6.3) de la pluralité un raccordement fluidique entre ce dispositif de raccordement (6.1, 6.2, 6.3) et la ou au moins une source de fluide (3) peut être établi et
dans lequel la ou chaque conduite hydraulique (10.1, 10.2, 10.3) peut être raccordée à plusieurs dispositifs de raccordement (6.1, 6.2, 6.3) de la pluralité et en être désolidarisée, un dispositif à la fois,
dans lequel
- l'établissement d'un raccordement fluidique entre un dispositif de raccordement (6.1, 6.2, 6.3) et la ou une source de fluide (3) et
- le raccordement de la ou une conduite hydraulique (10.1, 10.2, 10.3) avec son dispositif de raccordement (6.1, 6.2, 6.3)
établit un raccordement fluidique entre
- la source de fluide (3) et
- cette conduite hydraulique (10.1, 10.2, 10.3), et
dans lequel l'unité de commande (7, 12) est agencée pour identifier automatiquement ce dispositif de raccordement (6.1, 6.2, 6.3) qui est en fait raccordé à la conduite hydraulique (10.1, 10.2, 10.3)
en évaluant des signaux reçus depuis le dispositif de détection (15.1, 15.2, 15.3, 20),
**caractérisé en ce que**
l'unité de commande (7, 12) est agencée
- pour sélectionner ensuite chaque dispositif de raccordement (6.1, 6.2, 6.3) de la pluralité et
- pour établir un raccordement fluidique entre la ou au moins une source de fluide (3) et le dispositif de raccordement (6.1, 6.2, 6.3) sélectionné,
dans lequel le dispositif de détection (15.1, 15.2, 15.3, 20) est agencé
- pour détecter si la ou une conduite hydraulique (10.1, 10.2, 10.3) est alimentée en fluide et
- pour générer un signal de détection d'alimentation en fluide en cas de détection d'alimentation en fluide, et
dans lequel l'unité de commande (7, 12) est agencée pour identifier en tant que dispositif de raccordement raccordé
ce dispositif de raccordement (6.1, 6.2, 6.3) qui est sélectionné quand le ou au moins un signal de détection d'alimentation en fluide est reçu depuis le dispositif de détection (15.1, 15.2, 15.3, 20).

2. Système hydraulique selon la revendication 1,
**caractérisé en ce que**
la conduite hydraulique (10.1, 10.2, 10.3) est raccordée ou peut être raccordée à une pièce de machine (11.1, 11.2, 11.3) à alimenter en fluide,
dans lequel l'unité de commande (7, 12) est agencée
- pour déclencher l'alimentation en fluide de la pièce de machine (11.1, 11.2, 11.3)
- en déclenchant l'alimentation en fluide depuis la ou au moins une source de fluide (3) du dispositif de raccordement (6.1, 6.2, 6.3) identifié.

3. Système hydraulique selon l'une des revendications précédentes,
**caractérisé en ce que**
le système hydraulique comprend au moins un capteur de détection d'alimentation en fluide (15.1, 15.2, 15.3),
dans lequel le capteur de détection d'alimentation en fluide (15.1, 15.2, 15.3) est agencé pour détecter si la ou une conduite hydraulique (10.1, 10.2, 10.3) est alimentée ou non en fluide,
dans lequel le dispositif de détection (15.1, 15.2, 15.3, 20) est agencé pour détecter si la ou une conduite hydraulique (10.1, 10.2, 10.3) est alimentée ou non en fluide,
en détectant si le capteur de détection d'alimentation en fluide (15.1, 15.2, 15.3) a détecté ou non la présence d'alimentation en fluide dans cette conduite hydraulique (10.1, 10.2, 10.3), et
dans lequel le dispositif de détection (15.1, 15.2, 15.3, 20) est en outre agencé pour inclure dans le signal de détection d'alimentation en fluide généré un identifiant de ce capteur de détection d'alimentation en fluide (15.1, 15.2, 15.3) qui a détecté l'alimentation en fluide.

4. Système hydraulique selon l'une des revendications précédentes,
**caractérisé en ce que**
le système hydraulique comprend une pluralité de conduites hydrauliques (10.1, 10.2, 10.3),
dans lequel chaque conduite hydraulique (10.1, 10.2, 10.3) de la pluralité
- est raccordée ou peut être raccordée à une pièce de machine (11.1, 11.2, 11.3) à alimenter en fluide et
- peut être raccordée à au moins un dispositif de raccordement (6.1, 6.2, 6.3) de la pluralité de dispositifs de raccordement et en être désolidarisé,
dans lequel le dispositif de détection (15.1, 15.2, 15.3, 20) est agencé
- pour détecter pour chaque conduite hydraulique (10.1, 10.2, 10.3) de la pluralité si cette conduite hydraulique (10.1, 10.2, 10.3) est alimentée ou non en fluide et
- dans le cas où cette alimentation en fluide pour une conduite hydraulique (10.1, 10.2, 10.3) de la pluralité est détectée
- pour générer un signal de détection d'alimentation en fluide et pour inclure dans le signal généré un identifiant de cette pièce (11.1, 11.2, 11.3) qui est raccordée à cette conduite hydraulique (10.1, 10.2, 10.3), et
dans lequel l'unité de commande (7, 12) est agencée
- pour identifier automatiquement chaque dispositif de raccordement (6.1, 6.2, 6.3) raccordé à une conduite hydraulique (10.1, 10.2, 10.3) et
- pour identifier automatiquement quel dispositif de raccordement (6.1, 6.2, 6.3) est raccordé à quelle pièce de machine (11.1, 11.2, 11.3)
- en évaluant le ou chaque signal de détection d'alimentation en fluide reçu incluant l'identifiant de pièce.

5. Système hydraulique selon la revendication 4,
**caractérisé en ce que**
le système hydraulique comprend pour chaque conduite hydraulique (10.1, 10.2, 10.3) de la pluralité un capteur de détection d'alimentation en fluide attribué (15.1, 15.2, 15.3),
dans lequel chaque capteur de détection d'alimentation en fluide (15.1, 15.2, 15.3) est agencé pour détecter si cette conduite hydraulique (10.1, 10.2, 10.3), à laquelle le capteur de détection d'alimentation en fluide (15.1, 15.2, 15.3) est attribué, est alimentée ou non en fluide, et
dans lequel le dispositif de détection (15.1, 15.2, 15.3, 20) est agencé pour détecter pour chaque conduite hydraulique (10.1, 10.2, 10.3) si cette conduite hydraulique (10.1, 10.2, 10.3) est alimentée en fluide ou non
en détectant si le capteur de détection d'alimentation en fluide attribué (15.1, 15.2, 15.3) a détecté la présence d'alimentation en fluide dans cette conduite hydraulique (10.1, 10.2, 10.3).

6. Système hydraulique selon la revendication 5,
**caractérisé en ce que**
le dispositif de détection (15.1, 15.2, 15.3, 20) est agencé pour inclure dans le signal de détection d'alimentation en fluide généré comme identifiant de pièce
un identifiant de ce capteur de détection d'alimentation en fluide (15.1, 15.2, 15.3) qui a détecté l'alimentation en fluide dans la conduite hydraulique attribuée (10.1, 10.2, 10.3).

7. Système hydraulique selon la revendication 4,
**caractérisé en ce que**
le système hydraulique comprend un capteur de détection d'alimentation en fluide,
dans lequel le dispositif de détection est agencé
- pour attribuer le capteur de détection d'alimentation en fluide à au moins deux conduites hydrauliques (10.1, 10.2, 10.3) - une conduite après l'autre - et
- pour détecter à quelle conduite hydraulique attribuée (10.1, 10.2, 10.3) est attribué le capteur de détection d'alimentation en fluide
quand le capteur de détection d'alimentation en fluide détecte la présence d'alimentation en fluide.

8. Système hydraulique selon l'une des revendications 4 à 6,
**caractérisé en ce que**
le dispositif de détection (15.1, 15.2, 15.3, 20) a accès à un tableau accessible par ordinateur
qui attribue à chaque pièce de machine (11.1, 11.2, 11.3) à alimenter en fluide le capteur de détection d'alimentation en fluide (15.1, 15.2, 15.3) attribué à cette conduite hydraulique (10.1, 10.2, 10.3) raccordée à cette pièce de machine (11.1, 11.2, 11.3),
dans lequel le dispositif de détection (15.1, 15.2, 15.3, 20) est agencé pour évaluer le tableau pour inclure l'identifiant de pièce.

9. Système hydraulique selon l'une des revendications 4 à 8,
**caractérisé en ce que**
l'unité de commande (7, 12) est agencée pour générer automatiquement un tableau d'attribution accessible par ordinateur en évaluant des signaux provenant du dispositif de détection (15.1, 15.2, 15.3, 20),
dans lequel le tableau d'attribution généré attribue
à chaque pièce de machine hydrauliquement entraînée (11.1, 11.2, 11.3)
soit ce dispositif de raccordement (6.1, 6.2, 6.3) qui est en fait raccordé à cette conduite hydraulique (10.1, 10.2, 10.3) qui est raccordée à cette pièce de machine (11.1, 11.2, 11.3.) ou
l'information selon laquelle cette pièce de machine (11.1, 11.2, 11.3.) n'est pas en raccordement fluidique avec un dispositif de raccordement (6.1, 6.2, 6.3) .

10. Système hydraulique selon l'une des revendications précédentes,
**caractérisé en ce que**
le ou chaque source de fluide (3) comprend un générateur de pression hydraulique (5),
dans lequel le dispositif de détection (15.1, 15.2, 15.3, 20) comprend un capteur de détection de pression (15.1, 15.2, 15.3),
dans lequel le générateur de pression hydraulique (5) est agencé pour éjecter sous pression le fluide à l'extérieur de la source de fluide (3) et
dans lequel le capteur de détection de pression (15.1, 15.2, 15.3) est agencé pour détecter si la pression hydraulique est présente ou non dans la ou au moins une conduite hydraulique (10.1, 10.2, 10.3), et
dans lequel le dispositif de détection (15.1, 15.2, 15.3, 20) est agencé pour générer le ou au moins un signal de détection d'alimentation en fluide en cas de détection de pression hydraulique.

11. Système hydraulique selon la revendication 10,
**caractérisé en ce que**
le système hydraulique comprend une pluralité de clapets (13.1, 13.2, 13.3)
qui sont positionnés entre
- la source de fluide (3) et
- la pluralité de dispositifs de raccordement (6.1, 6.2, 6.3),
dans lequel l'unité de commande (7, 12) est agencée pour établir un raccordement fluidique entre la source de fluide (3) et un dispositif de raccordement (6.1, 6.2, 6.3) sélectionné
en ouvrant un clapet (13.1, 13.2, 13.3) et transférant ou maintenant chaque autre clapet dans un état fermé.

12. Combinaison agricole comprenant
- un véhicule de traction (1),
- un outil (2), et
- un système hydraulique selon l'une des revendications précédentes,
dans lequel l'outil (2) est au moins provisoirement mécaniquement raccordé au véhicule de traction (1),
dans lequel la pluralité de dispositifs de raccordement (6.1, 6.2, 6.3) et la ou au moins une source de fluide (3) sont montés à bord du véhicule de traction (1), et
dans lequel la ou chaque conduite hydraulique (10.1, 10.2, 10.3) et le dispositif de détection (15.1, 15.2, 15.3, 20) sont montés à bord de l'outil (2).

13. Combinaison agricole selon la revendication 12,
**caractérisée en ce que**
l'unité de commande (7, 12) comprend
- un dispositif de commande de véhicule (7) monté à bord d'un véhicule (1) et
- un dispositif de commande d'outil (12) monté à bord de l'outil (2),
dans laquelle le dispositif de commande d'outil (12) est en raccordement de données avec le dispositif de détection (15.1, 15.2, 15.3, 20),
dans laquelle le dispositif de commande de véhicule (7) est en raccordement de données avec le dispositif de commande d'outil (12), et
dans lequel le dispositif de commande de véhicule (7) est agencé
- pour sélectionner un dispositif de raccordement (6.1, 6.2, 6.3) et
- pour établir le raccordement fluidique entre la ou une source de fluide (3) et le dispositif de raccordement (6.1, 6.2, 6.3) sélectionné.

14. Procédé pour détecter un raccordement fluidique dans un système hydraulique d'une machine agricole (1, 2),
dans lequel le système hydraulique comprend
- au moins une source de fluide hydraulique (3),
- une pluralité de dispositifs de raccordement (6.1, 6.2, 6.3),
- au moins une conduite hydraulique (10.1, 10.2, 10.3),
- une unité de commande (7, 12), et
- un dispositif de détection (15.1, 15.2, 15.3, 20),
dans lequel la ou chaque conduite hydraulique (10.1, 10.2, 10.3) peut être raccordée à plusieurs dispositifs de raccordement (6.1, 6.2, 6.3) de la pluralité et en être désolidarisée, un dispositif à la fois, et
dans lequel le procédé comprend les étapes selon lesquelles
- la ou chaque conduite hydraulique (10.1, 10.2, 10.3) est raccordée à un dispositif de raccordement (6.1, 6.2, 6.3) de la pluralité et
- un raccordement fluidique entre la ou une source de fluide (3) et ce dispositif de raccordement (6.1, 6.2, 6.3) est établi
de telle sorte qu'un raccordement fluidique entre la ou une source de fluide (3) et la conduite hydraulique (10.1, 10.2, 10.3) qui est en fait raccordée au dispositif de raccordement (6.1, 6.2, 6.3) est établi, et
dans lequel le procédé comprend l'étape supplémentaire selon laquelle
l'unité de commande (7, 12) identifie automatiquement ce dispositif de raccordement (6.1, 6.2, 6.3) qui est en fait raccordé à la conduite hydraulique (10.1, 10.2, 10.3)
en recevant et évaluant des signaux provenant du dispositif de détection (15.1, 15.2, 15.3, 20),
**caractérisé en ce que**
le procédé comprend les étapes supplémentaires selon lesquelles
l'unité de commande (7, 12) ensuite
- sélectionne chaque dispositif de raccordement (6.1, 6.2, 6.3) de la pluralité et
- établit au moins provisoirement un raccordement fluidique entre la ou au moins une source de fluide (3) et le dispositif de raccordement (6.1, 6.2, 6.3) actuellement sélectionné,
le dispositif de détection (15.1, 15.2, 15.3, 20)
- détecte si la ou au moins une conduite hydraulique (10.1, 10.2, 10.3) est ou non alimentée en fluide et
- génère un signal de détection d'alimentation en fluide en cas de détection d'alimentation en fluide, et
l'unité de commande (7, 12) identifie comme dispositif de raccordement raccordé ce dispositif de raccordement (6.1, 6.2, 6.3) qui est sélectionné quand le signal de détection d'alimentation en fluide est reçu depuis le dispositif de détection (15.1, 15.2, 15.3, 20).

15. Procédé de détection de raccordement fluidique selon la revendication 14,
**caractérisé en ce que**
l'étape selon laquelle le dispositif de détection (15.1, 15.2, 15.3, 20) détecte si la conduite hydraulique (10.1, 10.2, 10.3) est alimentée ou non en fluide comprend l'étape selon laquelle
un capteur de détection d'alimentation en fluide (15.1, 15.2, 15.3) détecte si la conduite hydraulique (10.1, 10.2, 10.3) est alimentée ou non en fluide,
l'étape selon laquelle le dispositif de détection (15.1, 15.2, 15.3, 20) génère un signal de détection d'alimentation en fluide comprend l'étape selon laquelle
le dispositif de détection (15.1, 15.2, 15.3, 20) inclut dans le signal de détection d'alimentation en fluide généré un identifiant de ce capteur de détection d'alimentation en fluide (15.1, 15.2, 15.3) qui a détecté l'alimentation en fluide.

16. Procédé de détection de raccordement fluidique selon la revendication 14 ou la revendication 15,
**caractérisé en ce que**
le système hydraulique comprend une pluralité de conduites hydrauliques (10.1, 10.2, 10.3),
dans lequel chaque conduite hydraulique (10.1, 10.2, 10.3) de la pluralité peut être raccordée à au moins une pièce de machine (11.1, 11.2, 11.3) à alimenter en fluide et en être désolidarisée,
dans lequel le procédé comprend les étapes supplémentaires selon lesquelles
- une première conduite hydraulique (10.1) est raccordée à un premier dispositif de raccordement (6.1) et
- au moins une conduite hydraulique supplémentaire (10.2, 10.3) est raccordée à un dispositif de raccordement supplémentaire (6.2, 6.3),
dans lequel le procédé comprend les étapes supplémentaires selon lesquelles
le dispositif de détection (15.1, 15.2, 15.3, 20) détecte pour chaque conduite hydraulique (10.1, 10.2, 10.3) de la pluralité si cette conduite hydraulique est alimentée ou non en fluide,
dans le cas où l'alimentation hydraulique pour une conduite hydraulique (10.1, 10.2, 10.3) est détectée, les étapes supplémentaires sont effectuées, selon lesquelles
- le dispositif de détection (15.1, 15.2, 15.3, 20) génère un signal de détection d'alimentation en fluide,
- le dispositif de détection (15.1, 15.2, 15.3, 20) inclut dans le signal de détection d'alimentation en fluide généré un identifiant de cette pièce de machine (11.1, 11.2, 11.3) qui est raccordée à la conduite hydraulique (10.1, 10.2, 10.3) alimentée en fluide,
- l'unité de commande (7, 12) identifie automatiquement chaque dispositif de raccordement (6.1, 6.2, 6.3) raccordé à une conduite hydraulique (10.1, 10.2, 10.3), et
- l'unité de commande (7, 12) détecte quel dispositif de raccordement (6.1, 6.2, 6.3) est raccordé à quelle pièce de machine (11.1, 11.2, 11.3)
en évaluant le ou chaque signal de détection d'alimentation en fluide reçu incluant les identifiants de pièce.

17. Procédé de détection de raccordement fluidique selon la revendication 16,
**caractérisé en ce que**
l'étape selon laquelle le dispositif de détection (15.1, 15.2, 15.3, 20) détecte si la ou au moins une conduite hydraulique (10.1, 10.2, 10.3) est alimentée ou non en fluide
comprend l'étape selon laquelle le dispositif de détection (15.1, 15.2, 15.3, 20) détermine si un capteur de détection d'alimentation en fluide (15.1, 15.2, 15.3) attribué à cette conduite hydraulique (10.1, 10.2, 10.3) détecte ou non l'alimentation en fluide et
l'étape selon laquelle le dispositif de détection (15.1, 15.2, 15.3, 20) inclut un identifiant de la pièce (11.1, 11.2, 11.3) raccordée à cette conduite hydraulique (10.1, 10.2, 10.3)
comprend l'étape selon laquelle le dispositif de détection (15.1, 15.2, 15.3, 20) évalue un tableau accessible par ordinateur
qui attribue à chaque pièce de machine (11.1, 11.2, 11.3) à alimenter en fluide ce capteur de détection d'alimentation en fluide (15.1, 15.2, 15.3) qui est attribué à la conduite hydraulique (10.1, 10.2, 10.3) raccordée à cette pièce (11.1, 11.2, 11.3).
